# EUROPEAN PATENT APPLICATION

(11) **EP 3 943 520 A1**
(43) Date of publication of application: **26.01.2022**
(21) Application number: 20782103.4
(22) Date of filing: 01.04.2020
(51) Int. Cl.: C08F 220/28, C08L 33/04

(54) **THERMOSETTING RESIN COMPOSITION, COATING FILM FORMATION METHOD, AND CURED COATING FILM**

(30) Priority: 01.04.2019 WO PCT/JP2019/014475
(71) Applicant: Kyoeisha Chemical Co., Ltd., Osaka-shi, Osaka 541-0054 (JP)
(72) Inventor: MORIWAKI, Yuya, Nara-shi, Nara 630-8453 (JP); ASADA, Kosuke, Nara-shi, Nara 630-8453 (JP); DONKAI, Masaru, Nara-shi, Nara 630-8453 (JP); TAKENAKA, Naomi, Nara-shi, Nara 630-8453 (JP)
(74) Representative: Isarpatent
(86) International application number: PCT/JP2020/015070
(87) International publication number: WO 2020/204089

(57) **Abstract**

An object of the present invention is to provide a thermosetting coating material composition of which a transesterification reaction is a curing reaction, the thermosetting coating material having a property of being usable as a coating material composition. The thermosetting resin composition includes a compound (A) which is a compound (A-a) having two or more -COOR (R is a primary or secondary alkyl group) and/or a compound (A-b) having one -COOR (R is a primary or secondary alkyl group) and a hydroxyl group, and a polyol (B) having two or more hydroxyl groups and a transesterification catalyst (C).

## Description

### Technical Field

The present invention relates to a thermosetting resin composition using a transesterification reaction, which uses a transesterification catalyst, as a curing reaction, a coating film forming method, and a cured coating film using the same.

### Background Art

The inventors have studied thermosetting resin compositions using a transesterification reaction as a curing reaction (PTL 1). Through the recent studies, it has become clear that curing performance equivalent to that of curing using generally known melamine resins and polyisocyanate compounds can be secured by using a transesterification reaction as a curing reaction.

Melamine resins and polyisocyanate compounds are widely and generally used because the curing agents have a good thermal reactivity and cured resins obtained have superior characteristics. However, the melamine resin is presumed as the cause of sick house syndrome because it generates formaldehyde, so that it has been restricted in uses. Further, it is considered that it is preferable to find a curing agent which is cheaper and capable of low temperature curing because a polyisocyanate compound has high curing reaction performance but its high price. Thus, there is a possibility that these problems can be solved by using a transesterification reaction as a curing reaction.

In the above-mentioned PTL 1, it is essential to use tertiary alkyl ester as alkyl ester. However, in a case where tertiary alkyl ester is used as alkyl ester, a gas component having isobutylene presumed to be a main component is generated during curing, and it is required to suppress the generation of the gas component. Although it is possible to solve such a problem by using primary alkyl ester, a method capable of securing curability to a practical level is not disclosed in PTL 1.

PTL 2 discloses a powder coating material using a transesterification reaction of primary alkyl ester. However, an ester group related to a transesterification reaction is directly bonded to a main chain of an acrylic resin. Such a primary ester group has low reactivity in a transesterification reaction with a hydroxyl group.

### Citation List

### Patent Literature

PTL 1: JP-B-6398026
PTL 2: JP-A-H8-67833

### Summary of Invention

### Technical Problem

The present invention is contrived in view of the above-mentioned circumstances, and an object thereof is to obtain a thermosetting resin composition capable of obtaining satisfactory curing performance by a transesterification reaction between primary or secondary alkyl ester and a hydroxyl group.

### Solution to Problems

The present invention provides a thermosetting resin composition including a compound (A) which is a compound (A-a) having two or more -COOR (R is a primary or secondary alkyl group) and/or a compound (A-b) having one -COOR (R is a primary or secondary alkyl group) and a hydroxyl group, a polyol (B) having two or more hydroxyl groups, and a transesterification catalyst (C).

It is preferable that the transesterification catalyst (C) be a metal compound containing a metal other than alkali metal.

It is preferable that the compound (A) have a molecular weight of 3000 or less.

In the compound (A), it is preferable that a molecular weight/the number of -COOR groups=300 or less.

It is preferable that the compound (A) be a compound having at least one structure represented by the following General formula (1) and/or General formula (2).

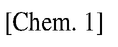

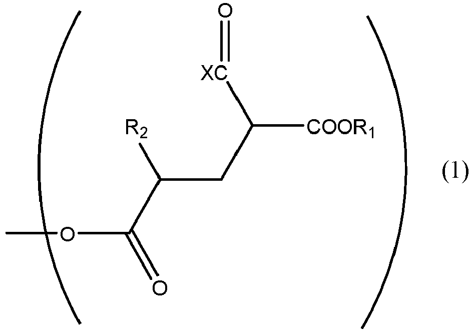

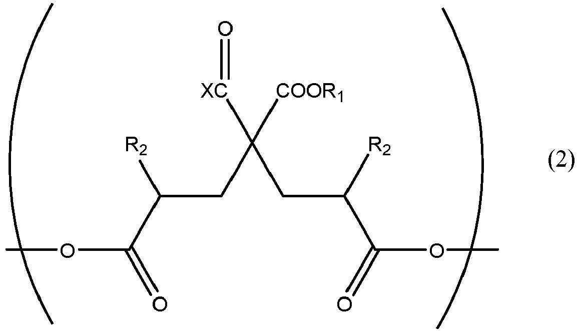

(R₁ represents a primary or secondary alkyl group.
X represents a hydrocarbon group having 5 or less carbon atoms or a -OR₁ group. In a case where a plurality of R₁ are contained in a molecule, these may be the same as or different from each other)
R₂ represents hydrogen or a methyl group. In a case where a plurality of R₂ are contained in a molecule, these may be the same as or different from each other.

It is preferable that the compound (A) be a compound having a structure represented by the following General formula (3).

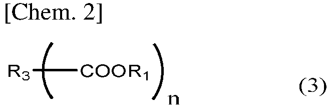

(in the formula, R₁ represents a primary or secondary alkyl group.

R₃ represents a hydroxyl group, an alkyl group or an alkylene group with 1 to 50 carbon atoms that may contain an ester group. n is an integer of 2 to 20)

It is preferable that a polyol resin (B) have a weight average molecular weight of 1000 to 1000000.

It is preferable that the above-mentioned thermosetting resin composition is a solvent-free, powder, solvent-based, or water-based composition.

Regarding the above-mentioned thermosetting resin composition, a viscosity at 25°C is preferably 200 mPa·s or less and further preferably 100 mPa·s or less when a solid content is 55% by weight or more in a state where only the components (A) to (C) and a solvent are contained.

The present invention also provides a cured film formed by three-dimensionally crosslinking the above-mentioned thermosetting resin composition.

### Advantageous Effects of Invention

A thermosetting resin composition of the present invention can obtain satisfactory curing performance by a transesterification reaction between primary or secondary alkyl ester and a hydroxyl group.

### Brief Description of Drawings

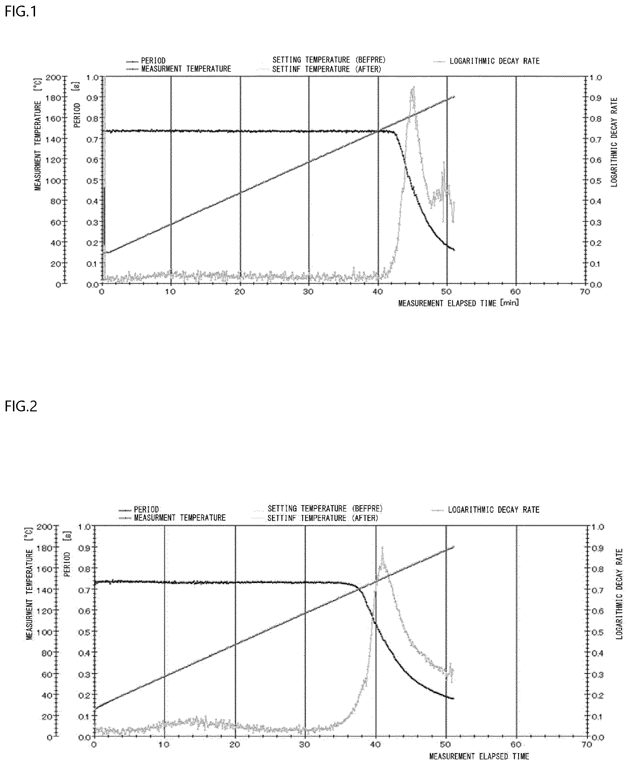

FIG. 1 is rigid pendulum tester data of Example 1;
FIG. 2 is rigid pendulum tester data of Example 2;

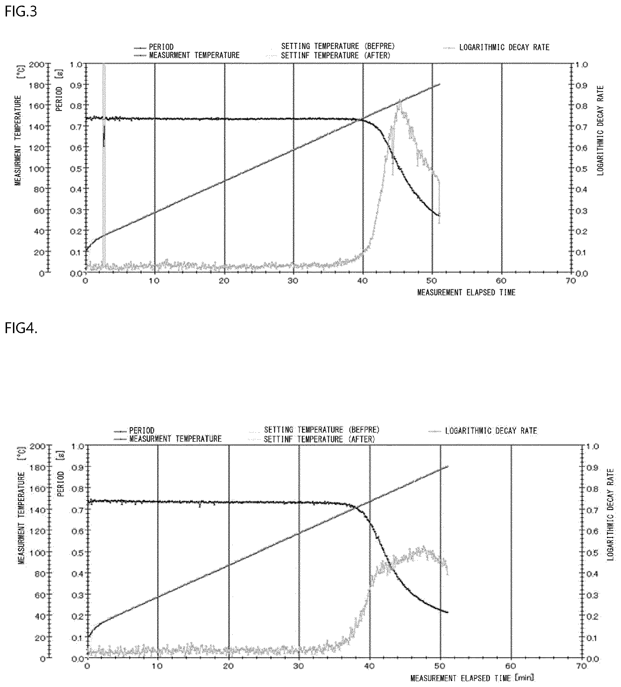

FIG. 3 is rigid pendulum tester data of Example 6;
FIG. 4 is rigid pendulum tester data of Example 7;

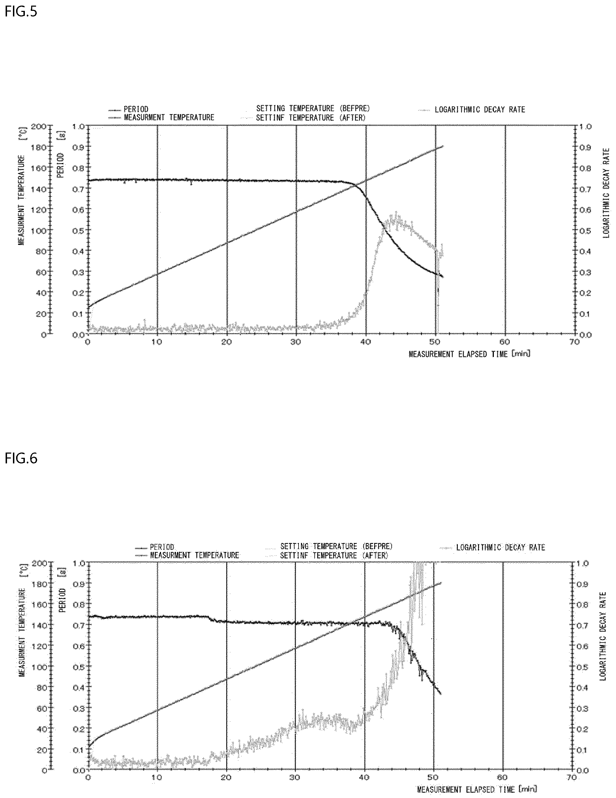

FIG. 5 is rigid pendulum tester data of Example 8;
FIG. 6 is rigid pendulum tester data of Example 10;

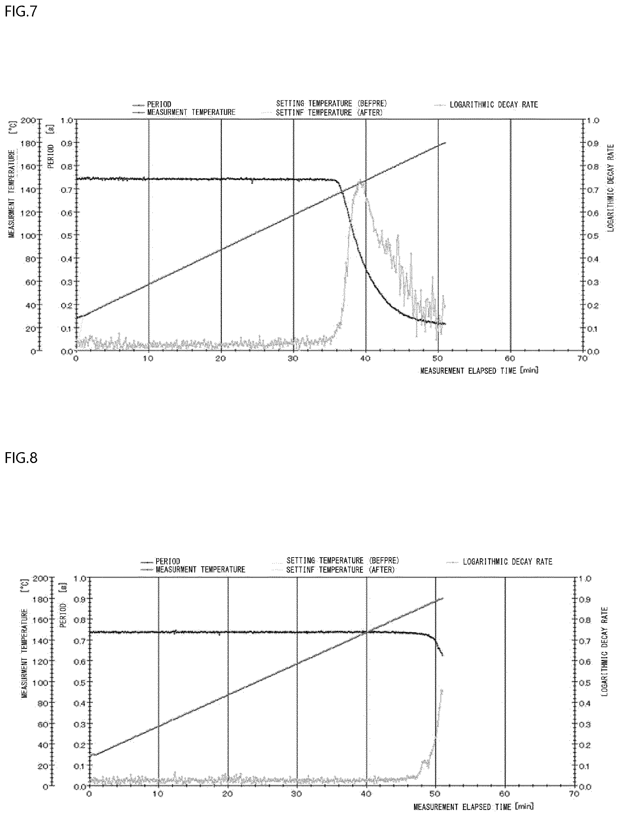

FIG. 7 is rigid pendulum tester data of Example 13;
FIG. 8 is rigid pendulum tester data of Comparative Example 7;

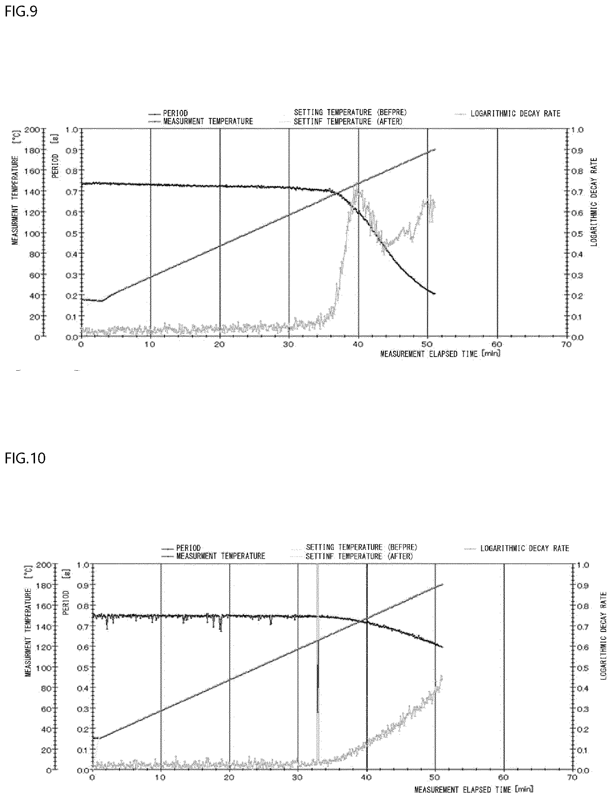

FIG. 9 is rigid pendulum tester data of Comparative Example 11;
FIG. 10 is rigid pendulum tester data of Comparative Example 12; and

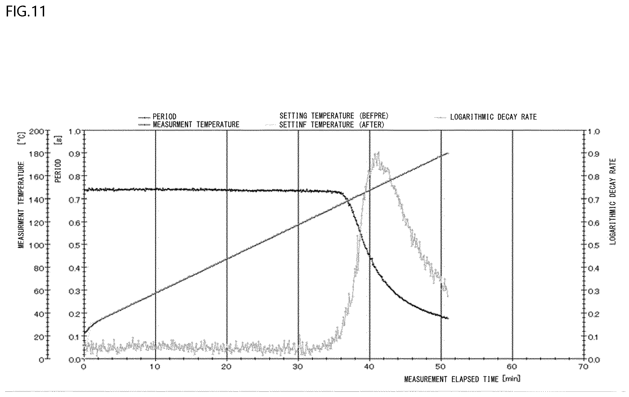

FIG. 11 is rigid pendulum tester data of Example 15.

### Description of Embodiments

Hereinafter, the present invention will be described in detail.

The present invention has been made by finding that a satisfactory curing reaction is obtained in a thermosetting resin composition that is cured by a transesterification reaction between a compound containing a primary or secondary alkyl ester group and a compound containing a hydroxyl group.

A polymer using primary or secondary alkyl ester of (meth)acrylic acid as a structural unit is a material which is well known as a material for a thermosetting resin composition. In general, it is known that such a polymer is cured by using a curing agent together as a polymer also containing a hydroxyl group.

However, in a case where a primary or secondary alkyl ester group is directly bonded to a main chain of a resin as in the case of such a well-known polyacrylic resin or the like, this ester group has low reactivity, and thus it is difficult to perform satisfactory curing by a transesterification reaction. It is presumed that this is because the primary or secondary alkyl ester group in the vicinity of the main chain is restricted by the main chain and has a low degree of freedom, so that the primary or secondary alkyl ester group tends to be difficult to approach a hydroxyl group.

For this reason, curing a thermosetting resin composition by a transesterification reaction using a compound containing a primary or secondary alkyl ester group has not been sufficiently studied so far. The inventors has completed the present invention by performing various studies and finding a composition capable of obtaining satisfactory curing by a reaction between a primary or secondary alkyl ester group and a hydroxyl group.

When satisfactory curing can be obtained by a reaction between a primary or secondary alkyl ester group and a hydroxyl group, a preferable result is obtained in that it is possible to solve a problem of deterioration of appearance due to foaming on the surface of a cured material due to the generation of a gas component, which is a problem in a case where a tertiary alkyl ester group (particularly, tertiary butyl ester) is used.

In addition, a transesterification reaction of a compound containing a tertiary alkyl ester group as disclosed in PTL 1 is most preferably catalyzed by an acid catalyst. This means that it is difficult to perform a reaction under basic conditions.

On the other hand, in the case of a primary or secondary alkyl ester group, a reaction is also promoted by a catalyst other than acid (for example, a metal catalyst, a basic catalyst, or the like). Thus, this is also preferable in that a curing reaction can be performed satisfactorily under basic conditions.

As a specific method of achieving curing by such a reaction between a primary or secondary alkyl ester group and a hydroxyl group, a compound (A) which is a compound (A-a) containing two or more -COOR groups and/or a compound (A-b) containing one or more -COOR (R is a primary or secondary alkyl group) and/or a hydroxyl group is contained. That is, a compound (A) containing two or more functional groups related to a transesterification reaction in one molecule is necessarily.

In the present invention, using a compound (A) having a molecular weight of 3000 or less, which is a compound (A-a) having two or more -COOR groups and/or a compound (A-b) having one or more -COOR (R is a primary or secondary alkyl group) and/or a hydroxyl group is particularly preferable in that satisfactory curability is obtained. Thereby, the alkyl ester group is not tied and can easily approach a hydroxyl group, and thus it is presumed that a reaction proceeds satisfactorily.

Meanwhile, in a case where such a compound having a low molecular weight is used, it is possible to achieve a high solid content (high solidification) of a coating material in addition to an excellent curing reactivity, which is also preferable. In the field of thermosetting resin compositions such as a coating material, it is preferable to increase the content of a solid component in a composition from the viewpoint of coating efficiency and a reduction in the amount of discharged solvent. In this case, it is preferable because viscosity is not likely to increase even when a solid content is increased.

Viscosity that can be applied to general coating methods such as spraying is preferable. That is, even in the case of a high solid content, it is desired that the viscosity is not excessively increased.

In the thermosetting resin composition of the present invention, when a polyol (B) is the above-mentioned low molecular weight material, it is preferable also in that a high solid content can be achieved while maintaining a low viscosity. Specifically, a solid content of 55% or more by weight can be achieved by using such an ester compound, which is a low molecular weight compound, as a reactive diluent.

In the present invention, a compound (A) having a molecular weight of 3000 or less and containing two or more -COOR (R is a primary or secondary alkyl group) means that at least one compound having a molecular weight of 3000 or less is contained. That is, it does not mean that an average molecular weight is 3000 or less but means that a compound having a molecular weight of 3000 or less is contained. In addition, it does not prevent a compound containing two or more -COOR (R is a primary or secondary alkyl group) having a molecular weight of more than 3000 from being used in combination.

Further, the molecular weight of the above-mentioned compound (A) is more preferably 2500 or less, further preferably 2000 or less, and most preferably 1000 or less.

In the present invention, the molecular weight of the above-mentioned compound (A) refers to a value measured by analyzing the compound (A) by known chemical analysis such as NMR analysis or mass spectrum analysis.

Further, in order to obtain a coating material having a high solid content and improve physical properties of a coating film, it is preferable to use a compound having a large number of functional groups, serving as reaction points, as the compound (A). From this point of view, it is preferable that a relation of a molecular weight/the number of -COOR groups=300 or less be established in the compound (A). The molecular weight/the number of -COOR groups is more preferably 200 or less, and further preferably 150 or less.

R is not particularly limited as long as it is a primary or secondary alkyl group, and an alkyl group having 50 or less carbon atoms can be used. The number of carbon atoms in R is more preferably 20 or less, further preferably 10 or less, and most preferably 4 or less. Specifically, examples thereof may include a methyl group, an ethyl group, a propyl group, a butyl group, and the like. These do not need to have a linear shape, and may have a branched shape as long as they are primary or secondary alkyl groups.

It is preferable that the thermosetting resin composition of the present invention contain the compound (A) in a proportion of 1 to 99% by weight with respect to a total amount of composition (in solid basis). A lower limit of the above-mentioned content is more preferably 5% by weight, and further preferably 10% by weight. An upper limit of the above-mentioned content is more preferably 90% by weight, and further preferably 80% by weight.

The compound (A) may further have a functional group other than an alkyl ester group. Examples of a functional group that may be present in a molecule may include a hydroxyl group, an amide group, an ester group, an ether group, an alkyl group, an alkenyl group, an alkynyl group, an amino group, and the like. In addition, a functional group having an aromatic ring or aliphatic ring structure may be used.

A compound that can be used as the above-mentioned compound (A) is not particularly limited, and a compound having a molecular weight of 3000 or less and having two or more alkyl ester groups that cause a transesterification reaction between the alkyl ester groups and a hydroxyl group may be used. However, more specific examples thereof may include the following compounds.

### (A-1) (Compound obtained as derivative of compound having active methylene group)

A compound having an alkyl ester group can be obtained from a compound having an active methylene group represented by the following General formula (6) by a reaction of the active methylene group and by reacting the active methylene group with various compounds (for example, a compound having a vinyl group, a compound having a halogen group, and the like). A compound obtained by such a reaction can also be used as a component in a resin component (A) of the present invention.

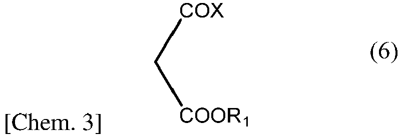

(in the formula, R₁ represents a primary or secondary alkyl group.
X represents an OR₁ group or a hydrocarbon group having 5 or less carbon atoms. When two R₁ are present in one molecule, these R₁ may be the same or different.)

Although the structure of R₁ is not particularly limited, but those having a known ester group such as methyl group, ethyl group, benzyl group, n-propyl group, isopropyl group, n-butyl group, isobutyl group, and sec-butyl ester group can be used.

Specific examples of such a compound having an active methylene group include malonic acid esters and acetoacetic acid esters. Compounds obtained by adding these compounds to a vinyl compound can be used. Each of these compounds will be described below.

### (A-1-1) Compound obtained by reaction between compound having active methylene group and compound having vinyl group

A compound having an active methylene group can be added to a double bond by a Michael addition reaction. A general Michael addition reaction using such a compound having an active methylene group is represented by the following formula.

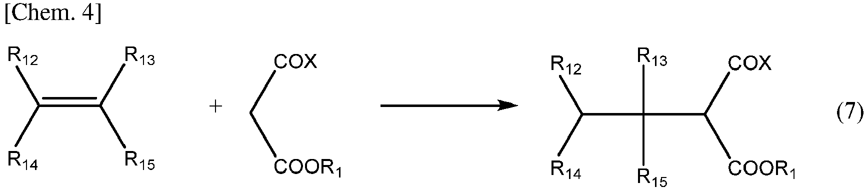

In the above-mentioned reaction, both the two hydrogens of the active methylene group cause a Michael addition reaction, whereby a compound represented by the following formula (7-1) can be obtained.

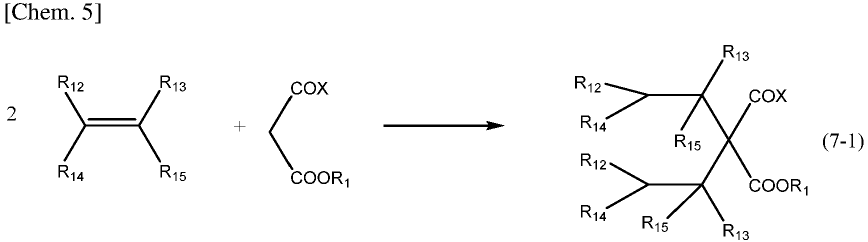

The compound obtained by such a reaction has a structure represented by the above-mentioned General formula (7) and/or a structure represented by the above-mentioned General formula (7-1). The compound has two or more alkyl ester groups so it can be particularly preferably used for the purpose of the present invention.

In particular, when(meth)acrylic acid or a derivative thereof is used as the vinyl compound of the above-mentioned general formula, the following reaction occurs.

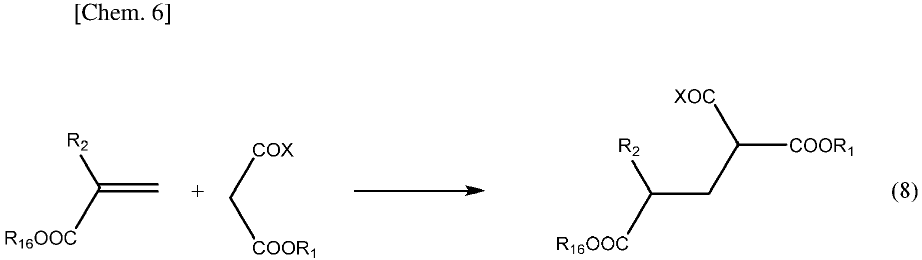

In the above-mentioned general formula, R₁ represents a primary or secondary alkyl group having 50 or less carbon atoms.

R₂ represents hydrogen or a methyl group.

R₁₆ is not particularly limited, and may be any functional group depending on the purpose.

In the above-mentioned reaction, both of the two hydrogens of the active methylene group cause a Michael addition reaction, whereby a compound represented by the following General formula (9) can be obtained.

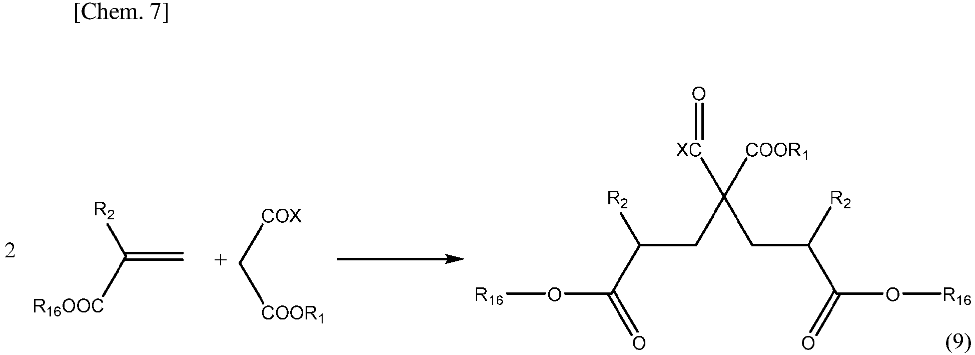

The compound represented by the above-mentioned General formula (9) can be obtained by adjusting the molar ratio of the (meth)acrylate and the active methylene compound in the mixing of the raw materials. Further, by adjusting these molar ratios, a mixture of the compound represented by the above-mentioned General formula (8) and the compound represented by the above-mentioned General formula (9) can be obtained.

The ester compound obtained by such a reaction will have a structural unit represented by any of the following structures in the molecule.

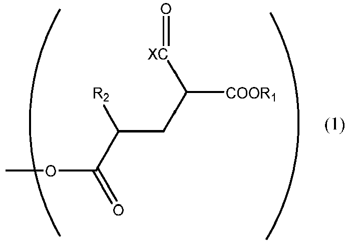

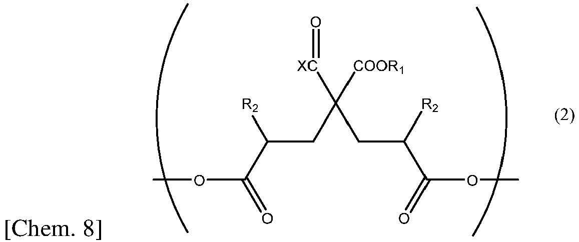

In the above-mentioned reaction, by using an acrylic acid derivative having two or more unsaturated bonds as a raw material, an ester compound having two or more of the structure represented by the above-mentioned General formula (1) and/or (2) in the molecule can be obtained.

That is, a compound having the functional group, which is a compound having a structure represented by any of the following general formulas, can be preferably used in the present invention.

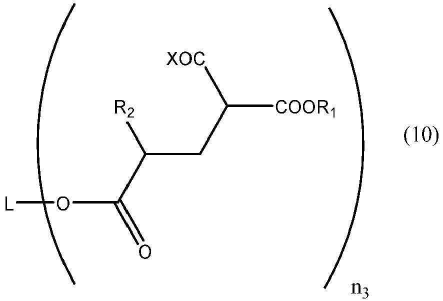

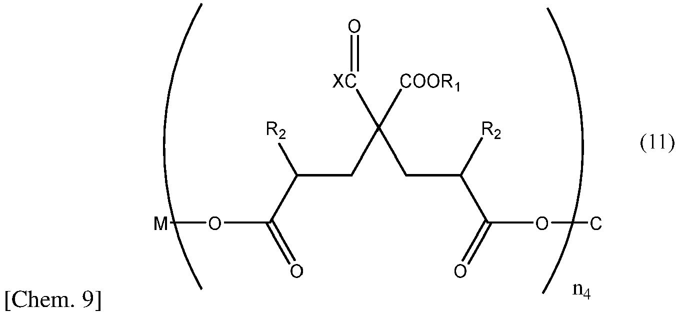

Such a compound is preferable because it has high transesterification reactivity and can obtain good curability because of many COOR groups in the molecule.

Most preferably, n₃ and n₄ in the above-mentioned general formula are 2 to 12. L and M are not particularly limited as long as the compound has a molecular weight of 3000 or less, and represent a hydrocarbon group which may has an arbitrary functional group such as a hydroxyl group, an ester group, and an ether group.

The (A-1-1) compound obtained by the addition reaction of the compound having an active methylene group with the compound having a vinyl group may be one having two or more structures represented by the above-mentioned General formula (10) and/or the above-mentioned General formula (11) in one molecule, which is obtained by using a compound having two or more unsaturated bonds in one molecule as a raw material.

Many compounds having a structure derived from a ester of a compound having an active methylene group are known, but the compound having the above-mentioned structure is particularly preferred because the addition reaction of malonic acid ester or acetoacetic acid ester with vinyl group can be easily promoted, and the compound can be easily synthesized, and the ester group number can be adjusted by selecting the starting raw material so that the curing performances and the resin performances after curing can be easily adjusted.

Specifically, dimethyl malonate, diethyl malonate, di-n-butyl malonate, methyl acetoacetate, ethyl acetoacetate and the like can be suitably used.

Such a compound is obtained by performing a Michael addition reaction with a compound having an active methylene group using various(meth)acrylic acid derivatives having one or more unsaturated bonds as raw materials. The "(meth)acrylic acid derivative having one or more unsaturated bonds" is not particularly limited, and examples thereof include the following.

Examples of (meth)acrylate having a functional group include methyl(meth)acrylate, ethyl(meth)acrylate, isopropyl(meth)acrylate, n-butyl(meth)acrylate, isobutyl(meth)acrylate, sec-butyl(meth)acrylate, t-butyl(meth)acrylate and the like.

Examples of the (meth)acrylate having two functional groups include 1,4-butanediol di(meth)acrylate, 1,3-butanediol di(meth)acrylate, 1,6-hexanediol di(meth)acrylate, ethylene glycol di(meth)acrylate, diethylene glycol di(meth)acrylate, triethylene glycol di(meth)acrylate, polyethylene glycol di(meth)acrylate, dipropylene glycol di(meth)acrylate, tripropylene glycol di(meth)acrylate, polypropylene glycol di(meth)acrylate, neopentyl glycol di(meth)acrylate, hydroxypivalic acid neopentylglycol di(meth)acrylate, 1,6-hexanediol di(meth)acrylate, 1,9-nonanediol di(meth)acrylate, 1,10-decanediol di(meth)acrylate, glycerin di(meth)acrylate, dimethylol-tricyclodecane di(meth)acrylate (DCP-A), EO adduct diacrylate of bisphenol A (Kyoeisha Chemical Co., Ltd.; Light Acrylate BP-4EA, BP-10EA), and PO adduct diacrylate of bisphenol A (Kyoeisha Chemical Co., Ltd.; BP-4PA, BP-10PA). Among them, PO adduct diacrylate of bisphenol A (Kyoeisha Chemical Co., Ltd.; BP-4PA), dimethylol-tricyclodecane di(meth)acrylate (DCP-A) and the like can be preferably used.

Examples of the (meth)acrylate having three functional groups include trimethylolmethane tri(meth)acrylate, trimethylolpropane tri(meth)acrylate, trimethylolpropane ethylene oxide-modified tri(meth)acrylate, trimethylolpropane propylene oxide-modified tri(meth)acrylate, pentaerythritol tri(meth)acrylate, glycerin propoxy tri(meth)acrylate, tris (2-(meth)acryloyloxyethyl) isocyanurate and the like. Among them, trimethylolpropane trimethacrylate, pentaerythritol trimethacrylate and the like can be preferably used.

Examples of the (meth)acrylate having four functional groups include dipentaerythritol tetra(meth)acrylate, pentaerythritol tetra(meth)acrylate, pentaerythritol ethylene oxide-modified tetra(meth)acrylate, pentaerythritol propylene oxide-modified tetra(meth)acrylate, and ditrimethylolpropane tetra(meth)acrylate. Among them, ditrimethylolpropane tetra(meth)acrylate, pentaerythritol tetra(meth)acrylate and the like can be preferably used.

Examples of (meth)acrylate having five or more functional groups include polyfunctional (meth)acrylates such as dipentaerythritol penta(meth)acrylate, ditrimethylolpropane penta(meth)acrylate, propionic acid-modified dipentaerythritol penta(meth)acrylate, dipentaerythritol hexa(meth)acrylate, ditrimethylolpropane hexa(meth)acrylate, and hexa(meth)acrylate of caprolactone-modified dipentaerythritol.

### (A-1-2) Compound obtained by reaction between compound having active methylene group and halogen-containing compound

A compound obtained in this manner can also be suitably used in the present invention. In particular, examples thereof may include compounds in which carbonyl carbon of an ester group is directly halogenated. Halogen is not particularly limited, and examples thereof may include chlorine, bromine, iodine, and the like.

Examples of such a compound may include compounds obtained by a reaction formula represented by the following General formula (15). 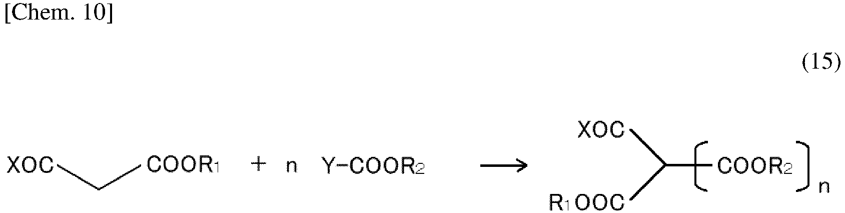 R₁ and R₂ are primary or secondary alkyl groups having 50 or less carbon atoms (R₁ and R₂ may be the same), X is a hydrocarbon group having 5 or less carbon atoms or a -OR₁ group, Y is halogen, and n is 1 or 2.

Specific examples of a compound corresponding to the above-mentioned compound (A-1) are shown below.

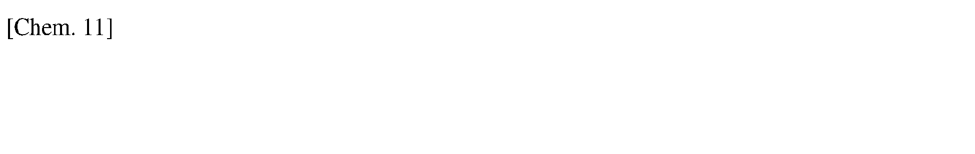

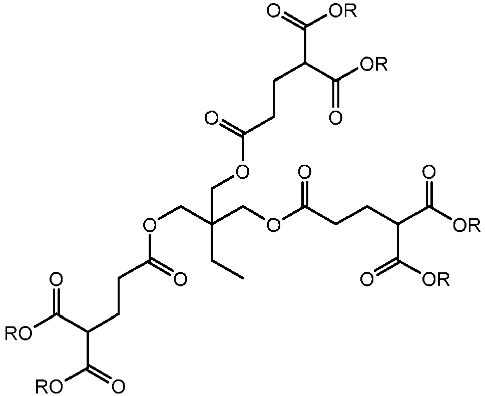

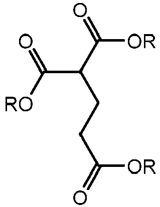

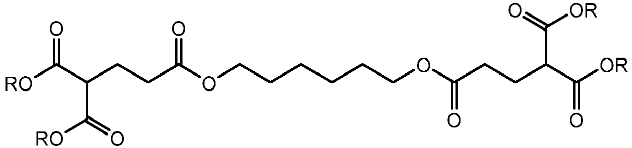

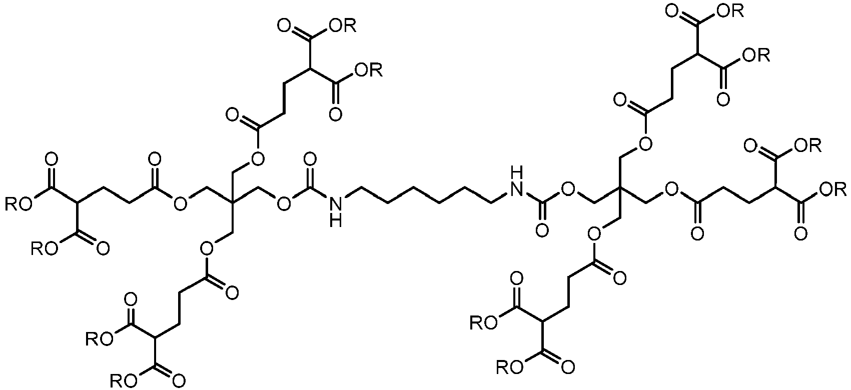

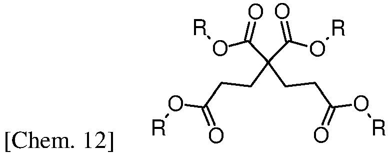

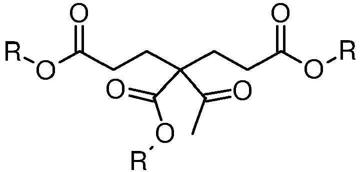

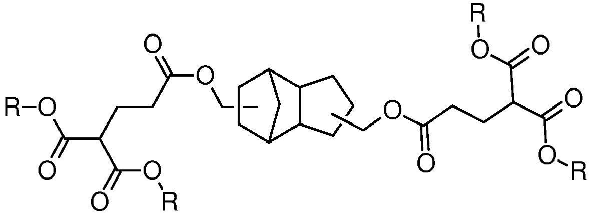

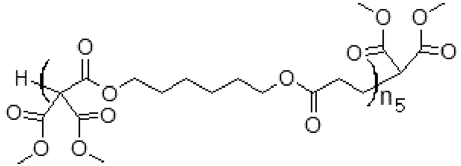

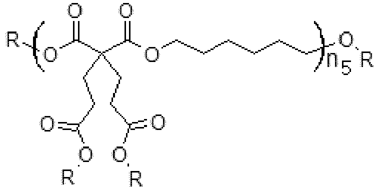

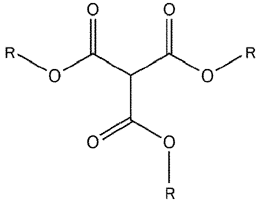

In the formula, R represents the same or different primary or secondary alkyl group. In addition, n₅ represents 1 to 10.

It is preferable that the above-mentioned compound (A-1) have three or more primary or secondary alkyl ester groups serving as crosslinking points in a molecule. That is, as the number of alkyl ester groups in a molecule increases, a crosslinking density of a resin after curing becomes higher, and thus the hardness of the cured material is improved, and a cured material having excellent physical properties is obtained, which is preferable. The number of primary or secondary alkyl ester groups in a molecule is more preferably five or more.

### (A-2) Compound having functional group represented by the following General formula (31)

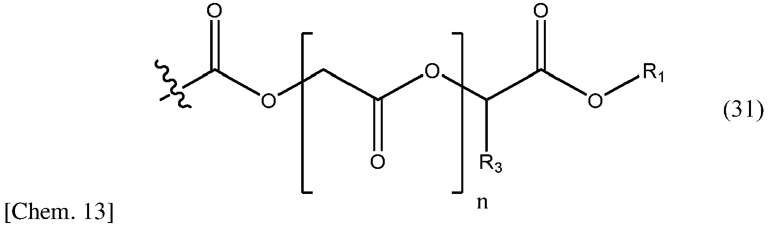

n=0 to 20

R₁ is an alkyl group having 50 or less carbon atoms.

R₃ is hydrogen or an alkyl group having 10 or less carbon atoms.

The above-mentioned compound (A) may be a compound in which an alkyl ester group has a structure represented by the above-mentioned General formula (31).

Although the reason is unknown, an ester group represented by the above-mentioned General formula (31) has high reactivity of a transesterification reaction. For this reason, an ester compound having the functional group can be used as a portion or the entirety of the compound (A) to obtain a thermosetting resin composition having excellent curing performance.

### (Regarding structure of General formula (31))

The structure of the above-mentioned General formula (31) is based on an α-substituted carboxylic acid ester skeleton.

In General formula (31), n is 0 to 20.

A lower limit of n is more preferably 1. An upper limit of n is more preferably 5.

Further, the compound may be a mixture of a plurality of components having different values of n in the above-mentioned General formula (31). In this case, an average value nav of n is preferably 0 to 5. A lower limit of nav is more preferably 1. An upper limit of nav is more preferably 3. The measurement of nav can be performed by NMR analysis. Further, the value of n can also be measured by NMR analysis.

Here, n may be 0, but it is further preferable that the value of n exceeds 0 because an aqueous thermosetting resin composition having higher reactivity can be obtained.

That is, when n is 1 or greater, it is possible to achieve curing at a lower temperature and more suitably exhibit the effects of the present invention.

In the above-mentioned General formula (31), a primary or secondary alkyl group having 50 or less carbon atoms can be used as R₁, and R₁ may be either a primary alkyl group or a secondary alkyl group.

The alkyl group in the above-mentioned alkyl ester group (that is, R₁ in the above-mentioned general formula) is an alkyl group having 50 or less carbon atoms, but the number of carbon atoms is preferably within the range of 1 to 20, more preferably within the range of 1 to 10, still more preferably within the range of 1 to 6, and most preferably within the range of 1 to 4. Such ranges are preferable in that a curing reaction can suitably proceed.

As the above-mentioned alkyl group, known alkyl groups such as a methyl group, an ethyl group, a benzyl group, an n-propyl group, an isopropyl group, an n-butyl group, an isobutyl group, and a sec-butyl group can be specifically used.

A compound having the above-mentioned functional group (31) can be obtained by reacting an ester compound in which an active group X is introduced into an α position of a carbonyl group having the structure of the following General formula (32) with a carboxylic acid or a carboxylic acid salt compound corresponding to the structure of a target compound.

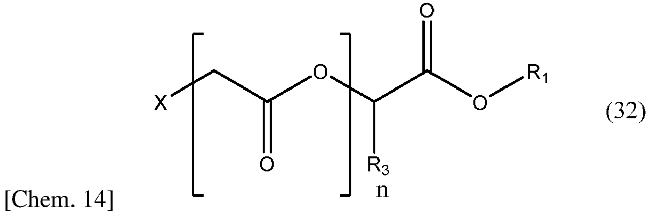

(X represents halogen or a hydroxyl group)

The above reaction is represented by general formulas as follows.

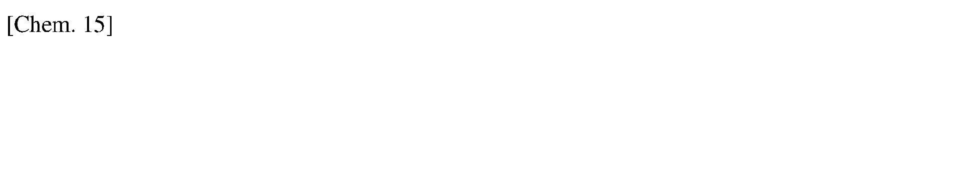

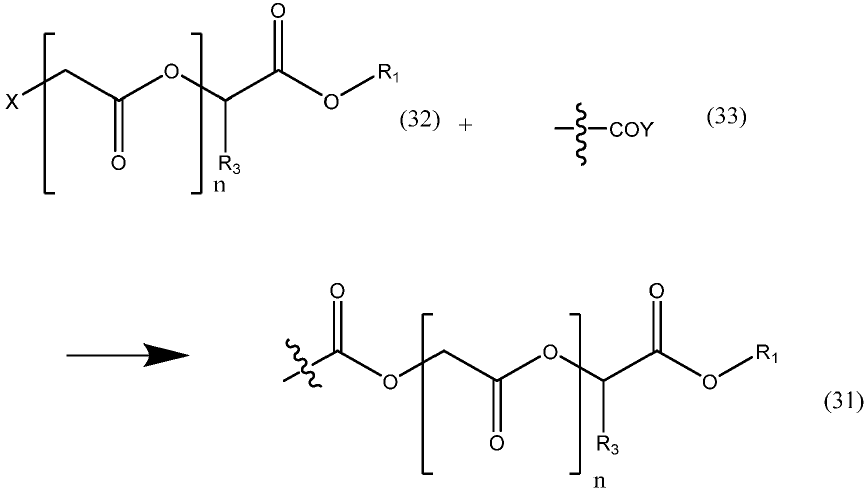

In the above-mentioned general formula, the above-mentioned reaction can be performed on any carboxylic acid when a compound that can be used as a raw material represented by General formula (33) that can cause the above-mentioned reaction. Examples of the carboxylic acid derivatives include those in which Y is OM (carboxylic acid salt), OC=OR (acid anhydride), Cl (acid chloride), and the like. In the case of the above-mentioned carboxylic acid salt of Y=OM, examples of the carboxylic acid salt may include a sodium salt, a potassium salt, an amine salt, a zinc salt, and the like. Meanwhile, in a case where a compound is used as a monomer of a polymer, a compound having an unsaturated group can be used as a compound represented by General formula (33).

A compound represented by the above-mentioned General formula (32) can be a compound having a skeleton corresponding to a target structure represented by General formula (31).

In addition, a method of manufacturing a compound represented by the above-mentioned General formula (32) is not particularly limited. Among compounds represented by the above-mentioned General formula (32), a compound of n=0 is a compound having an active group represented by X at an α-position, and examples thereof may include various α-hydroxy acids and α-halogenated carboxylic acids. Specifically, examples thereof may include methyl chloroacetate, ethyl chloroacetate, methyl bromoacetate, ethyl bromoacetate, methyl 2-chloropropionate, methyl glycolate, methyl lactate, ethyl lactate, butyl lactate, and the like.

An example of a method of manufacturing a compound of n= 1 or greater among compounds represented by the above-mentioned General formula (32) will be described below.

Meanwhile, contents to be described below are an example of a manufacturing method, and the present invention is not limited to a compound obtained by the following manufacturing method.

For example, a compound can be obtained by a reaction between a carboxylic acid having halogen at an α-position, a salt thereof, or a derivative thereof and a carboxylic acid alkyl ester having halogen or a hydroxyl group at an α-position. When this is represented by general formulas, the following is obtained.

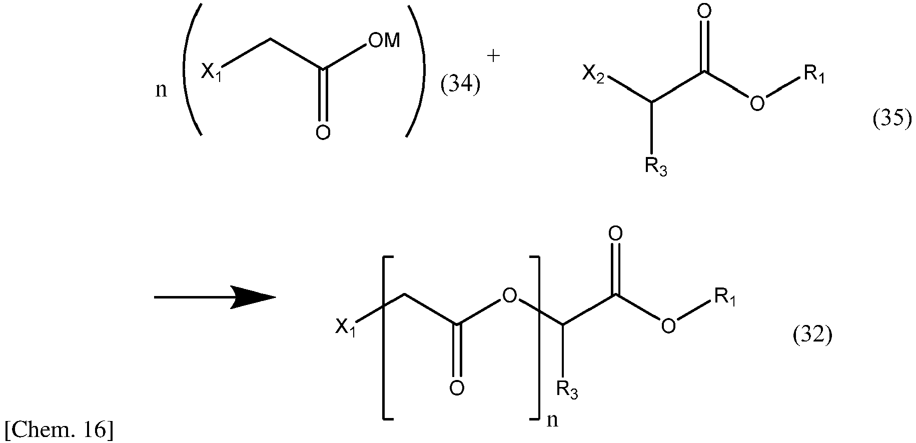

Examples of the carboxylic acid having halogen at an α-position, a salt thereof, or a derivative thereof may include an alkali metal salt (potassium salt, sodium salt, or the like), acid anhydride, acid chloride, and the like of the carboxylic acid. As a specific compound represented by the above-mentioned General formula (34), sodium chloroacetate or the like can be used.

Examples of the carboxylic acid alkyl ester having halogen or a hydroxyl group at an α-position may include alkyl ester of an α-substituted carboxylic acid compound such as chloroacetic acid, bromoacetic acid, or lactic acid. An alkyl group of the above-mentioned alkyl ester is not particularly limited and may be an alkyl group having 1 to 50 carbon atoms.

Such an alkyl group may be a primary or secondary alkyl group, and specific examples thereof may include a methyl group, an ethyl group, a benzyl group, an n-propyl group, an isopropyl group, an n-butyl group, an isobutyl group, a sec-butyl group, and the like.

In the above-mentioned reaction, it is preferable that X₁ and X₂ be of different types. It is preferable to select a combination of functional groups so that X₁ remains unreacted on the assumption that X₁ and X₂ have different reactivities as different types of functional groups. Specifically, a combination of X₁ as a bromo group and X₂ as a chloro group is particularly preferable.

In addition, the value of n can be adjusted by adjusting a mixing ratio of two types of raw materials in the above-mentioned reaction. In the above-mentioned reaction, a mixture of a plurality of different types of compounds having different values of n is generally obtained. Regarding a compound having a structure of the above-mentioned General formula (31), only a compound having a specific value of n by refining the compound may be used, or a mixture of a plurality of types of compounds having different values of n may be used.

A chemical structure represented by the above-mentioned General formula (31) can be formed by reacting a compound represented by the general formula (32) with various carboxylic acid compounds. Thus, compounds obtained by reacting a compound represented by the above-mentioned General formula (32) with a compound having two or more carboxyl groups or a compound having one carboxyl group, and a compound having a hydroxyl group can be suitably used in the present invention.

In order to use the above-mentioned compound in the thermosetting resin composition of the present invention, a compound having two or more functional groups is preferable, as the above-mentioned compound and polycarboxylic acid having two or more carboxyl groups, a hydroxy carboxylic acid having a carboxyl group and a hydroxyl group, and the like can be used.

Various polycarboxylic acids are general-purpose raw materials that are widely and inexpensively provided in many applications such as polyester raw materials, polyamide raw materials, neutralizers, and synthetic raw materials. A compound in which such polycarboxylic acid is converted into a functional group represented by the above-mentioned General formula (31) by a known method can also be used in the present invention.

When such a compound is used as a compound having a functional group represented by General formula (31), the compound can be esterified at low cost by a known method, and a multivalent ester group can be introduced with a relatively low molecular weight. In addition, compatibility with an organic solvent is improved by esterification, and thus the compound can be suitably used, which is preferable.

Polycarboxylic acid to be used here is not particularly limited, and for example, polycarboxylic acid having 50 or less carbon atoms can be used.

More specifically, examples thereof may include aliphatic polyvalent carboxylic acids such as maronic acid, succinic acid, glutaric acid, adipic acid, pimelic acid, suberic acid, azelaic acid, sebacic acid, undecanedioic acid, dodecanedioic acid, brasslyic acid, octadecanedioic acid, butanetetracarboxylic acid, and methanetricarboxylic acid;
alicyclic polyvalent carboxylic acids such as 1,2-cyclohexane dicarboxylic acid, 1,3-cyclohexane dicarboxylic acid, 1,4-cyclohexane dicarboxylic acid, 4-cyclohexene-1,2-dicarboxylic acid, 3-methyl-1,2-cyclohexane dicarboxylic acid, 4-methyl-1,2-cyclohexane dicarboxylic acid, 1,2,4-cyclohexane tricarboxylic acid, 1,3,5-cyclohexane tricarboxylic acid and the like;
aromatic polyvalent carboxylic acids such as phthalic acid, isophthalic acid, terephthalic acid, naphthalene dicarboxylic acid, 4,4'-biphenyl dicarboxylic acid, trimellitic acid, pyromellitic acid and the like;
hydroxycarboxylic acids such as glycolic acid, citric acid, lactic acid, 3-hydroxybutanoic acid, and 3-hydroxy-4-ethoxybenzoic acid; and the like.
Meanwhile, as an example of such a compound, a general structure of a compound when the above-mentioned reaction has been performed using citric acid as polycarboxylic acid is shown below.

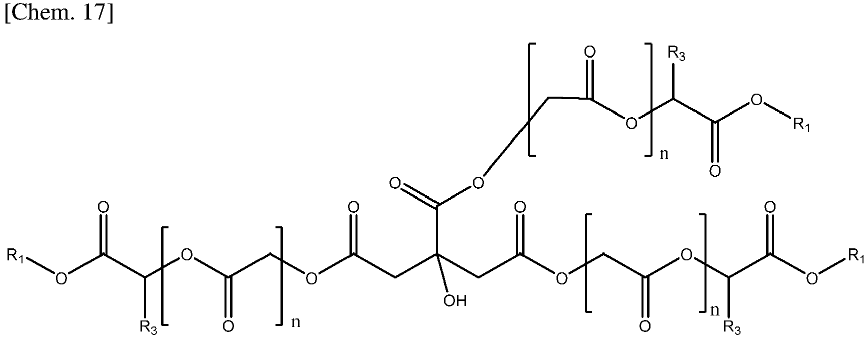

### (A-3) Compound having functional group represented by the following General formula (41) and/or functional group represented by the following General formula (42)

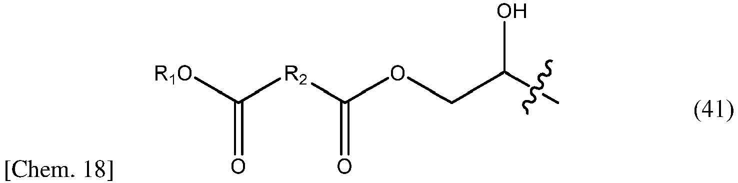

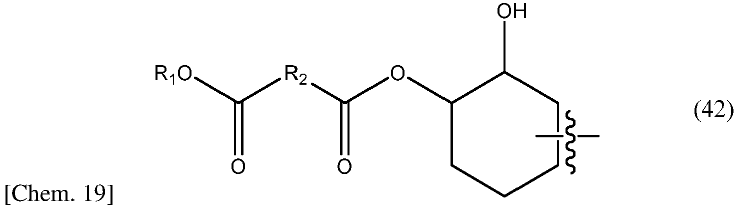

(in any one of the above-mentioned General formula (41) and General formula (42), R₁ is an alkyl group having 50 or less carbon atoms.

R₂ is an alkylene group having 50 or less carbon atoms that may contain an oxygen atom and a nitrogen atom as a portion thereof.)

That is, a COOR group may have a structure represented by the above-mentioned General formula (41) and/or a structure represented by the above-mentioned General formula (42). Further, in the structures represented by the above-mentioned General formula (41) and General formula (42), a compound having a hydroxyl group in addition to a -COOR group is shown, and thus a compound having one of such functional groups can cause crosslinking based on a transesterification reaction. However, from the viewpoint of obtaining more suitable curing performance, it is preferable that a COOR₈ group have two or more structures as a structure represented by the above-mentioned General formula (41) and/or a structure represented by the above-mentioned General formula (42).

A compound having the above-mentioned structure has a hydroxyl group in the structure. It is presumed that the hydroxyl group also contributes to a transesterification reaction. For this reason, a compound having one structure out of a structure represented by the above-mentioned General formula (41) and/or a structure represented by the above-mentioned General formula (42) in a molecule can have a thermosetting property. However, in order to obtain more suitable curing performance, it is preferable to have two or more of the structures.

Further, a compound having a structure represented by the above-mentioned General formula (41) and/or a structure represented by the above-mentioned General formula (42) in a molecule has a high transesterification reactivity, and thus the compound is preferable in this respect.

The alkyl group in the above-mentioned alkyl ester group (that is, R₁ in the above-mentioned general formula) is a primary or secondary alkyl group having 50 or less carbon atoms, but the number of carbon atoms is preferably within the range of 1 to 20, more preferably within the range of 1 to 10, still more preferably within the range of 1 to 6, and most preferably within the range of 1 to 4. Such ranges are preferable in that a curing reaction can suitably proceed.

As the above-mentioned alkyl group, known alkyl groups such as a methyl group, an ethyl group, a benzyl group, an n-propyl group, an isopropyl group, an n-butyl group, an isobutyl group, and a sec-butyl group can be specifically used.

The R₂ group in the above-mentioned General formula (41) is an alkylene group having 50 or less carbon atoms that may contain an oxygen atom and a nitrogen atom as a portion thereof, and specifically, may include a methylene group, an ethylene group, an n-propylene group, an i-propylene group, an n-butylene group, or a cyclic structure such as a benzene ring or a cyclohexyl ring (carbon chains 1 to 50). Among them, an ethylene group is particularly preferable because the ethylene group is made from an inexpensive raw material and has an excellent reactivity.

A method of manufacturing an ester compound having a functional group represented by the above-mentioned General formula (41) is not particularly limited, but examples of the method may include a method of reacting an epoxy compound with a compound having an alkyl ester group and a carboxyl group. When this is represented by a general formula, the following reaction is shown.

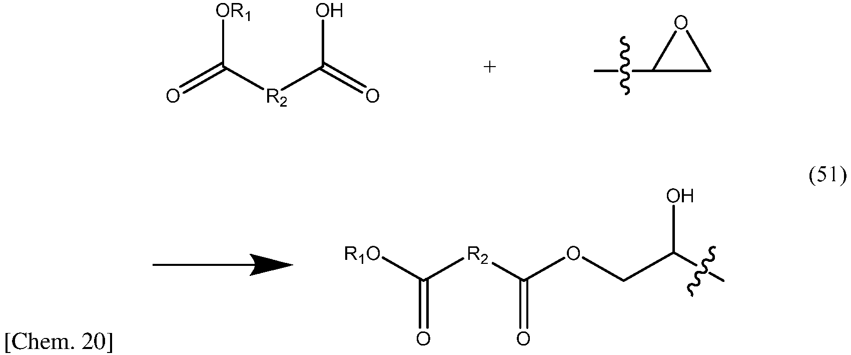

In the above-mentioned reaction, a compound having an alkyl ester group and a carboxyl group to be used can be manufactured by a reaction between acid anhydride and alcohol such as the following reaction.

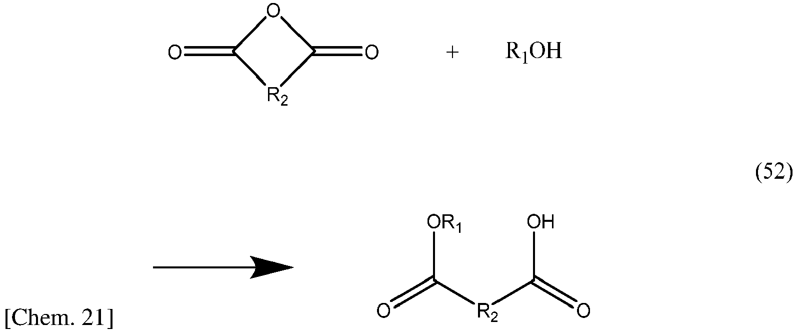

Acid anhydride which is a raw material in a reaction represented by the above-mentioned General formula (52) is not particularly limited, and various dibasic anhydride such as succinic anhydride, maleic anhydride, phthalic anhydride, hexahydrophthalic anhydride, methylhexahydrophthalic anhydride, benzoic anhydride, and itaconic anhydride having a cyclic structure can be used. A reaction represented by the above-mentioned General formula (52) is a well-known general reaction and can be performed under general reaction conditions and the like.

Meanwhile, a compound having an alkyl ester group and a carboxyl group which is used in a synthesis method represented by the above-mentioned General formula (51) is not limited to a compound obtained by a method of the above-mentioned General formula (52), and compounds obtained by other methods may also be used.

In the synthesis method represented by the above-mentioned General formula (51), an epoxy compound is used as an essential component. The above-mentioned epoxy compound is not particularly limited, and any epoxy compound can be used.

For example, when epichlorohydrin is used, an epoxy group can be introduced into a compound having various skeletons by reacting the epichlorohydrin with a phenol compound, a carboxylic acid compound, a hydroxyl group-containing compound, or the like. A compound having a functional group represented by the above-mentioned General formula (41) can be obtained by performing the above-mentioned reaction on such any epoxy compound. A general formula of such a reaction is shown below.

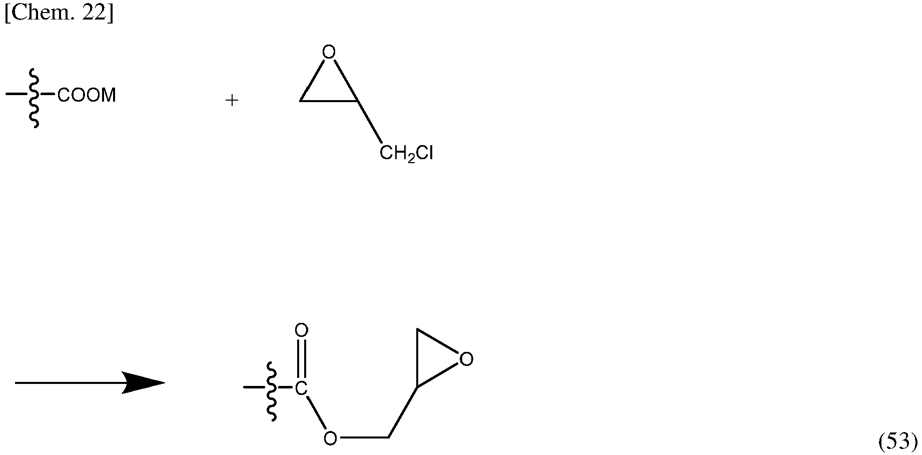

Further, the above-mentioned epoxy compound may be a cyclic epoxy compound.

That is, in a case where a cyclic epoxy compound is used as an epoxy compound, a compound having a structure represented by General formula (42) can be obtained by the following reaction.

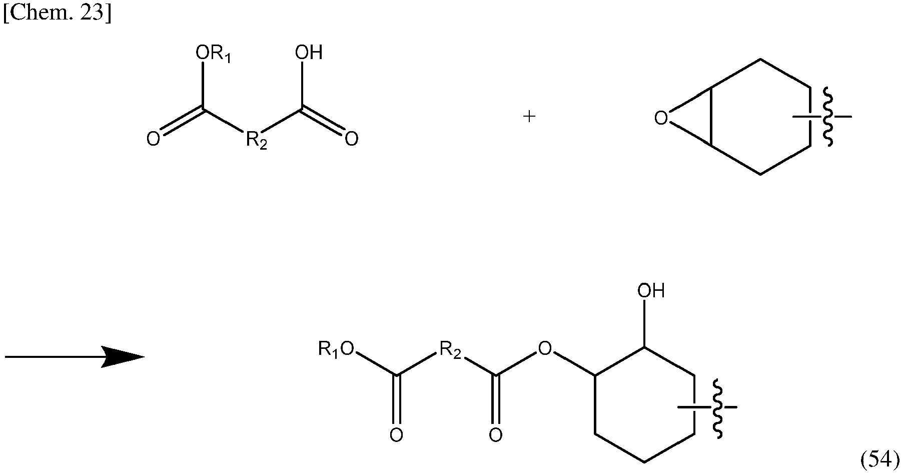

Examples of an alicyclic epoxy compound that can be used for the above-mentioned general formula may include 3,4-epoxycyclohexylmethylmethacrylate, 3',4'-epoxycyclohexylmethyl 3,4-epoxycyclohexanecarboxylate, and the like.

A compound having a functional group represented by General formula (41) and/or a functional group represented by General formula (42) can be obtained by the above-mentioned manufacturing method.

A compound having two or more of such functional groups and a compound having such a functional group and a hydroxyl group can be suitably used as components of a resin composition of which a transesterification reaction is a curing reaction.

A compound having a functional group represented by General formula (41) and/or a functional group represented by General formula (42) is used as a curable functional group in a curable resin composition. Thus, it is preferable that the compound have two or more functional groups. More specifically, the compound may be a compound having two or more of functional groups represented by the above-mentioned General formula (41) and/or functional groups represented by the above-mentioned General formula (42), or may be a compound having a hydroxyl group and the like, in addition to the functional group represented by the above-mentioned General formula (41) and/or a functional group represented by the functional group represented by the above-mentioned General formula (42).

As described above, the functional group represented by the above-mentioned General formula (41) and/or the functional group represented by General formula (42) can be introduced by performing a reaction represented by General formula (51) or a reaction represented by General formula (54) on various epoxy compounds.

Thus, a compound obtained by performing a reaction represented by the above-mentioned General formula (54) on a known epoxy compound can also be used in the present invention.

An epoxy compound that can be used in such a reaction is not particularly limited, and examples thereof may include an aliphatic polyfunctional liquid epoxy resin, a bisphenol A type epoxy resin, a bisphenol F type epoxy resin, a biphenyl type epoxy resin, a phenol novolac type epoxy resin, a cresol novolac type epoxy resin, a bisphenol derivative epoxy resin, a naphthalene skeleton or alicyclic skeleton-containing novolac epoxy resin, and the like, and may include an epoxy resin whose oxylan ring is glycidyl ether, and the like.

It is preferable that the above-mentioned epoxy compounds be each a compound having two or more epoxy groups in one molecule.

Further, an epoxy compound can be obtained by performing a reaction represented by General formula (53) on a carboxylic acid or a derivative thereof as described above.

Then, a compound having a functional group represented by General formula (41) and/or a functional group represented by General formula (42) can be obtained by performing a reaction represented by the above-mentioned General formula (51) on the epoxy compound.

Thus, it is possible to obtain a compound having such a functional group or a compound having such a functional group and a hydroxyl group by performing the above-mentioned reaction on various polycarboxylic acids and hydroxy carboxylic acids.

Polycarboxylic acid that can be used as a raw material at the time of obtaining a compound having a functional group represented by General formula (41) and/or a functional group represented by General formula (42) by the above-mentioned reaction is not particularly limited, and for example, polycarboxylic acid having 50 or less carbon atoms can be used.

More specifically, examples thereof may include various polycarboxylic acids and hydroxy carboxylic acids described as raw materials at the time of obtaining a compound having a structure of the above-mentioned General formula (31).

Further, examples thereof may also include fatty acids such as coconut oil fatty acid, cottonseed oil fatty acid, hemp oil fatty acid, rice bran oil fatty acid, fish oil fatty acid, tall oil fatty acid, soybean oil fatty acid, linseed oil fatty acid, tung oil fatty acid, rapeseed oil fatty acid, castor oil fatty acid, dehydrated castor oil fatty acid, safflower oil fatty acid and the like; and monocarboxylic acids such as lauric acid, myristic acid, palmitic acid, stearic acid, oleic acid, linoleic acid, linolenic acid, benzoic acid, p-tert-butylbenzoic acid, cyclohexanoic acid, 10-phenyloctadecanoic acid and the like.

Specific examples of such a compound may include compounds having a structure which is shown below.

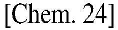

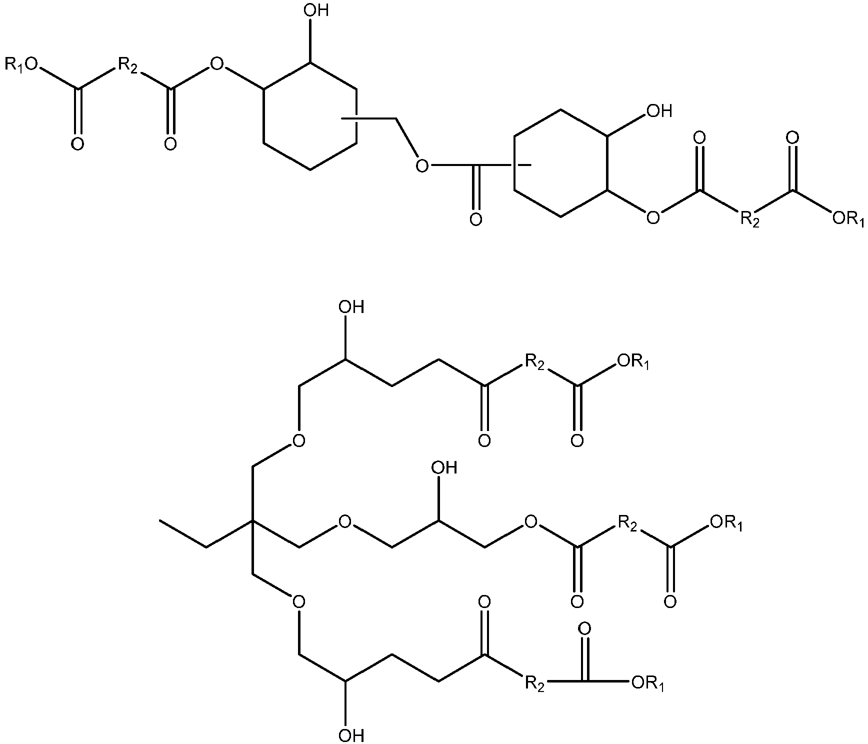

### (A-4) Alkyl ester of polyfunctional carboxylic acid

A compound obtained by reacting a polyfunctional carboxylic acid or a derivative thereof with alcohol can also be used as the ester compound (A) of the present invention. Such a reaction can be represented by the following general formula.

[Chem. 25] R₁₈-(COOH)ₙ₆ + n₆ HO-R₁ → R₁₈-(COOR₁)ₙ₆ + n₆ H₂O

Various polyfunctional carboxylic acids are general purpose raw materials widely and inexpensively provided in many applications such as polyester raw materials, polyamide raw materials, neutralizing agents, synthetic raw materials and the like. Compounds obtained by alkyl esterification of such polyfunctional carboxylic acids by a known method can also be used in the present invention. The esterification can be carried out by the above-mentioned alkyl group having 50 or less carbon atoms. The esterification can be performed using the above-mentioned primary or secondary alkyl group having 50 or less carbon atoms.

When such a compound is used as the ester compound (A), it can be esterified inexpensively by a known method and a polyvalent ester group can be introduced with a relatively low molecular weight. Further, by esterification, the compatibility with an organic solvent is improved, so that it is preferred that it can be suitably used.

The polyfunctional carboxylic acid to be used here is not particularly limited, and for example, a polyfunctional carboxylic acid having 50 or less carbon atoms can be used.

More specifically, examples thereof may include various polycarboxylic acids, hydroxy carboxylic acids, and the like described as raw materials at the time of obtaining a compound having a structure of the above-mentioned General formula (31).

In the present invention, a method for alkyl esterification of the above-mentioned polyfunctional carboxylic acid is not particularly limited, and a known method such as dehydration condensation with alcohol can be applied. In addition, acid anhydride of these compounds may be used as raw materials.

In compounds corresponding to the above-mentioned (A-1) to (A-4), a compound having both a hydroxyl group and an alkyl ester group is preferable in that the compound has a self-crosslinking property. Both the functional groups are contained in the same compounds, and thus a transesterification reaction occurs between the same compounds, which results in more satisfactory curing performance.

In compounds corresponding to (A-1), examples of a compound having a hydroxyl group in a molecule may include compounds corresponding to (A-1) and (A-2) obtained from a compound having a hydroxyl group as a raw material. Further, compounds corresponding to (A-3) all correspond to a compound having a hydroxyl group. Further, in compounds corresponding to (A-4), an alkyl ester of a polyfunctional carboxylic acid having a hydroxyl group corresponds to a compound having a hydroxyl group.

In the present invention, two or more types of the above-mentioned compounds (A) may be used in combination.

In the present invention, it is preferable to use a bifunctional compound (A) and a trifunctional or higher functional compound (A) in combination. With such a composition, an effect of lowering the viscosity or improving the compatibility of a resin composition can be easily obtained, and the crosslink density of a thermosetting film can also be easily improved, which is preferable. In this case, regarding a mixing ratio, it is preferable that the bifunctional compound (A) and the trifunctional or higher functional compound (A) be mixed at a ratio of 1:9 to 9:1 (weight ratio).

Further, in the thermosetting resin composition of the present invention, an ester group in the ester compound (A) can be arbitrarily mixed with respect to the number of hydroxyl groups, but mixed preferably at 1 to 200% (number ratio).

In a case where the thermosetting resin composition of the present invention is a composition in which a compound (A) containing two or more hydroxyl groups is mixed, there is an advantage in that a polyol that has been used in thermosetting resin compositions of the related art using a polyisocyanate curing agent, a melamine resin, or the like can be used as it is.

In a case where the above-mentioned compound (A) is used, it is preferable that a polyol compound to be described below in detail have a hydroxyl value of 1 to 300 mgKOH/g.

Further, in a case where the above-mentioned (A) is used, it is preferable that a polyol resin (B) used in combination with (A) have a weight average molecular weight of 1000 to 1000000. Thus, this is preferable in that a process such as coating can be easily performed. The above-mentioned lower limit is more preferably 2000, and further preferably 3000. The above-mentioned upper limit is more preferably 800000, and further preferably 700000.

### (B) Polyol

In the present invention, a polyol (B) is contained in addition to the above-mentioned compound (A). Thus, a coating film is efficiently cured by reacting a compound (B) having at least two hydroxyl groups in a molecule with the above-mentioned ester compound (A).

Such a compound (B) is not particularly limited, and examples thereof may include an acrylic polyol, a polyester polyol, a polyether polyol, a polycarbonate polyol, a polyurethane polyol, and the like. Among these, two or more polyols may be used at the same time.

Among them, it is particularly preferable to use an acrylic polyol and/or a polyester polyol. Further, a low molecular weight polyol can also be used.

As the acrylic polyol and/or the polyester polyol used herein, resins which are generally used in the fields of coating materials can be used.

In addition, the above-mentioned polyol (B) may be a polymer having the above-mentioned alkyl ester group.

These will be described below in detail.

### (B-1) Acrylic polyol

An acrylic polyol can be produced, for example, by copolymerizing a hydroxyl group-containing polymerizable unsaturated monomer (bi) and another polymerizable unsaturated monomer (b₂) copolymerizable with the above-mentioned (bi) by a known method. More specifically, polymerization methods such as a solution polymerization method in an organic solvent, an emulsion polymerization method in water, a miniemulsion polymerization method in water, and an aqueous solution polymerization method can be mentioned.

The hydroxyl group-containing polymerizable unsaturated monomer (bi) is a compound having one or more hydroxyl groups and one or more polymerizable unsaturated bonds in one molecule. The hydroxyl group-containing polymerizable unsaturated monomer (bi) is not particularly limited.

Particularly representative examples of such hydroxyl group-containing vinyl monomers are shown below.

Various hydroxyl group-containing vinyl ethers such as 2-hydroxyethyl vinyl ether, 3-hydroxypropyl vinyl ether, 2-hydroxypropyl vinyl ether, 4-hydroxybutyl vinyl ether, 3-hydroxybutyl vinyl ether, 2-hydroxy-2-methylpropyl vinyl ether, 5-hydroxypentyl vinyl ether, or 6-hydroxyhexyl vinyl ether; or addition reaction products of these various vinyl ethers listed above and ε-caprolactone; various hydroxyl group-containing allyl ethers such as 2-hydroxyethyl(meth)allyl ether, 3-hydroxypropyl(meth)allyl ether, 2-hydroxypropyl(meth)allyl ether, 4-hydroxybutyl(meth)allyl ether, 3-hydroxybutyl(meth)allyl ether, 2-hydroxy-2-methylpropyl(meth)allyl ether, 5-hydroxypentyl(meth)allyl ether, or 6-hydroxyhexyl(meth)allyl ether; or addition reaction products of these various allyl ethers mentioned above and ε-caprolactone; or various hydroxyl group-containing (meth)acrylates such as 2-hydroxyethyl(meth)acrylate, 2-hydroxypropyl(meth)acrylate, 3-hydroxypropyl(meth)acrylate, 2-hydroxybutyl(meth)acrylate, 3-hydroxybutyl(meth)acrylate, 4-hydroxybutyl(meth)acrylate, polyethylene glycol mono(meth)acrylate, or polypropylene glycol mono(meth)acrylate; or addition reaction main components of these various (meth)acrylates mentioned above and ε-caprolactone, and the like.

In a case where the above-mentioned acrylic polyol has an alkyl ester group, it is preferable that the alkyl ester group easily cause a transesterification reaction. Such an alkyl ester group is described below in detail.

In a case where the above-mentioned acrylic polyol has an alkyl ester group, a polymer having a monomer represented by the following General formula (4) as a partial or entire structural unit is preferable.

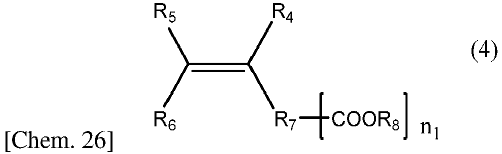

n₁: 1 to 10
(in the formula, R₄, R₅, and R₆ are the same or different and each is a hydrogen, an alkyl group, a carboxyl group, an alkyl ester group or a structure represented by R₇-[COOR₈]n₁;
R₇ is an aliphatic, an alicyclic or an aromatic alkylene group with a number of atoms of 50 or less in the main chain, which may have one or more functional groups selected from the group consisting of an ester group, an ether group, an amide group, and a urethane and may have a side chain;
R₈ is an alkyl group having 50 or less carbon atoms; and
in the compound represented by the above-mentioned General formula (4), the R₇-[COOR₈]n₁ group may be a lactone structure represented by the following General formula (4-1).)

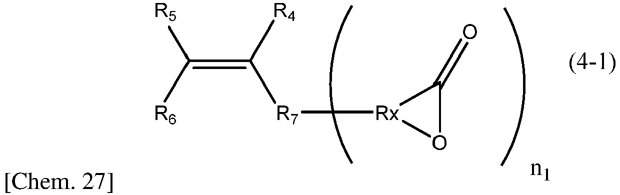

(Rx is a hydrocarbon group having 2 to 10 carbon atoms which may have a branched chain.)

A monomer represented by the above-mentioned General formula (4) has primary or secondary alkyl ester. A primary or secondary alkyl ester group derived from such a monomer easily causes a reaction with a hydroxyl group, and thus it is possible to sufficiently achieve the object of the present invention.

A polymer may be obtained by polymerization reaction via an unsaturated bond of the above-mentioned compound. As to the polymer thus obtained, the main chain formed based on the polymerization of the unsaturated bond and the alkyl ester group are present apart via the linking group in the case that the polymer is used in a thermosetting resin composition using a transesterification reaction as a curing reaction. Therefore, the alkyl ester group can move relatively freely. As a result, it has been found by the present inventors that the alkyl ester group and the hydroxyl group are easily accessible, and the reactivity of transesterification is improved. By improving the reactivity of the transesterification reaction in this manner, short-time curing and reduction in the curing temperature can be realized, and the usefulness of the thermosetting resin composition by the transesterification reaction can be enhanced.

Further, in a case where an alkyl ester group is a t-butyl ester group, a gas component is generated during heat curing. It is presumed that the t-butyl group became isobutene due to an elimination reaction, but it has been known that bubbles are generated in a cured resin, which may cause various problems such as a deterioration in appearance and a deterioration in strength. In the present invention, primary or secondary alkyl ester is contained, and thus such a problem has been improved. Meanwhile, from this point of view, it is preferable that a composition in the present invention do not have a t-butyl group, but the composition may have a t-butyl group as long as the above-mentioned problems do not occur.

When the above-mentioned unsaturated group-containing ester compound of the present invention is used, it is presumed that a decrease in the viscosity of a coating film during curing suppresses foaming, and the above-mentioned problems are significantly reduced. Also in this respect, the present invention has a suitable effect.

In the above-mentioned unsaturated group-containing ester compound, an alkyl ester group is not limited as long as it is a primary or secondary alkyl group.

The alkyl group of the above-mentioned alkyl ester group is not particularly limited, and an alkyl ester group having a known alkyl group such as a methyl group, an ethyl group, a benzyl group, an n-propyl group, an isopropyl group, an n-butyl group, an isobutyl group, or a sec-butyl group can be used. Meanwhile, it is preferable that the alkyl group have 50 or less carbon atoms. Since the alkyl group is formed as an alcohol during the transesterification reaction and is preferably volatilized, the alkyl group is more preferably one having 20 or less carbon atoms, still more preferably 10 or less carbon atoms. The boiling point of the alcohol volatilizing in the curing reaction is preferably 300°C or less, more preferably 200°C or less.

The alkyl group in the alkyl ester group (that is, R₅ in the above-mentioned general formula) is an alkyl group having 50 or less carbon atoms, but the number of carbon atoms is preferably within the range of 1 to 20, more preferably within the range of 1 to 10, still more preferably within the range of 1 to 6, and most preferably within the range of 1 to 4. Within such a range, it is preferable in that the curing reaction can proceed suitably.

The case where the alkyl ester group is a lactone group is also included in the present invention. The ester group of such a lactone group can also cause the transesterification reaction of the present invention and can be utilized for curing reaction. Such a compound has the chemical structure of the above-mentioned (4-1).

More specifically, as the structure represented by the above-mentioned General formula (1), for example, the following structure may be mentioned.

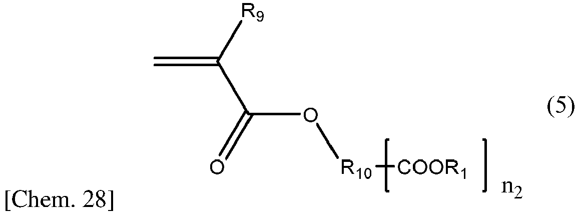

n₂: 1 to 10
(in the formula, R₉ is H or a methyl group.
R₁₀ is an alkylene group with a number of atoms of 48 or less in the main chain, which may have an ester group, an ether group and/or an amide group in the main chain, and may have a side chain; and R₁ is a primary or secondary alkyl group.)

Such a compound is a derivative of (meth)acrylic acid and can be obtained by a known synthesis method using(meth)acrylic acid or a derivative thereof as a raw material.

The number of atoms in the main chain of R₁ is more preferably 40 or less, still more preferably 30 or less, and further more preferably 20 or less. The atom that may be contained in the main chain of R₁₀ is not particularly limited, and an oxygen atom, a nitrogen atom, a sulfur atom, a silicon atom and the like in addition to a carbon atom may be contained. More specifically, in the main chain of R₁₀, an ether group, an ester group, an amino group, an amide group, a thioether group, a sulfonate group, a thioester group, a siloxane group, and the like in addition to an alkyl group may be contained.

Specific examples of a compound represented by the above-mentioned General formula (5) are shown below as (B-1-1) to (B-1-4).

### (B-1-1)

As specific examples of structures represented by the above-mentioned General formula (5), for example, the compounds represented by the following General formula (12) may be mentioned below.

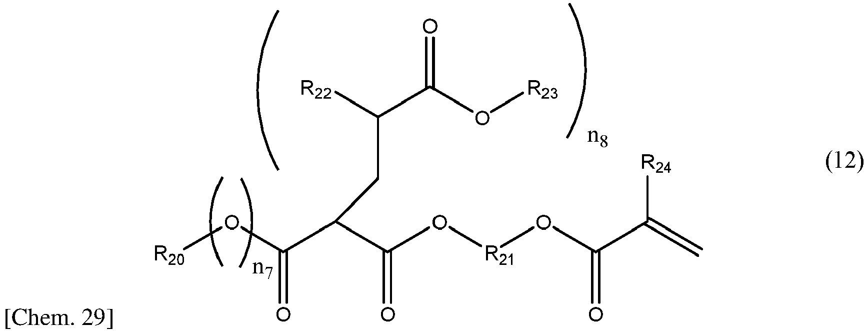

### (in the formula, R₂₀ is an alkyl group having 1 to 50 carbon atoms.

R₂₁ is an alkylene group with a number of atoms of 44 or less in the main chain, which may have an ester group, an ether group and/or an amide group in the main chain, and may have a side chain.

R₂₂ is H or a methyl group.

R₂₃ is an alkyl group.

R₂₄ is H or a methyl group.

n₇ is 0 or 1.

n₈ is 1 or 2.)

The compound represented by the above-mentioned General formula (12) is a compound synthesized by reacting a compound which generates an active anion such as a malonic acid ester or an acetoacetic acid ester having an unsaturated bond in the molecule with an unsaturated compound having an alkyl ester group.

That is, malonic acid esters and acetoacetic acid have a methylene group interposed between carboxy carbons, and this methylene group is easily anionized and widely known as a group which readily produces anion reaction. A compound having an unsaturated bond in alkyl group of malonic acid ester or acetoacetic ester (for example, ester compounds of malonic acid or acetoacetic acid with an unsaturated monomer having a hydroxyl group as detailed below as a hydroxyl group-containing monomer) is reacted with an alkyl ester compound having an unsaturated group to synthesis a compound having both of an unsaturated group and an alkyl ester group.

Only the alkyl ester group in the compound having such a structure can be easily changed by using a raw material used widely, and as a result, the curing reactivity can be easily adjusted. In addition, it is particularly preferable in that the curing reactivity can be adjusted by changing the reaction ratio to an active methylene group.

The compound which can be used as the "alkyl ester compound having an unsaturated group" used in the above-mentioned reaction is not particularly limited, and examples thereof include(meth)acrylic acid alkyl ester, methylene malonate alkyl ester, lactone compounds having an unsaturated group (for example, γ-crotonolactone, 5,6-dihydro-2H-pyran-2-one) and the like can be used.

The reaction can be carried out under basic conditions, and for example, can be carried out in an organic solvent in the presence of a crown ether of alkali metal salt.

An example of such a synthesis reaction is shown below.

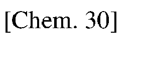

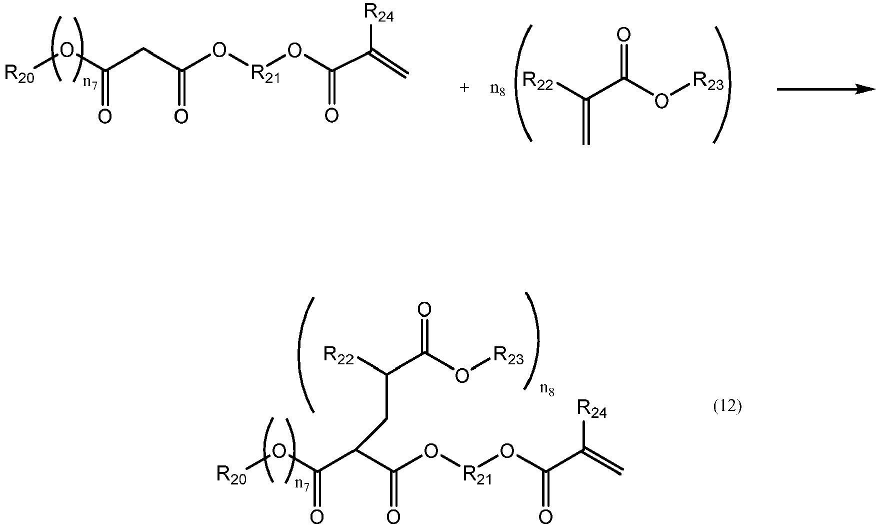

(B-1-2)

It can also be obtained by esterification of a carboxylic acid corresponding to the alkyl ester compound represented by the above-mentioned General formula (5).

That is, the compound represented by the following General formula (5-1) is a carboxylic acid corresponding to the alkyl ester compound represented by the above-mentioned General formula (5).

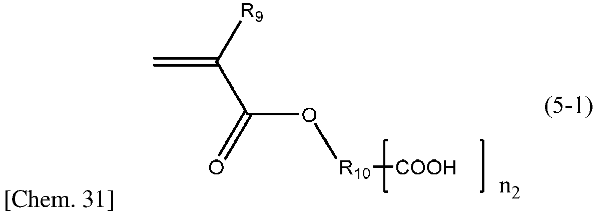

n₂:1 to 10

### (in the formula, R₉ is H or a methyl group.

R₁₀ is an alkylene group with a number of atoms of 48 or less in the main chain, which may have an ester group, an ether group and/or an amide group in the main chain, and may have a side chain.)

There is a known compound as a compound represented by the above-mentioned General formula (5-1). Such a known compound can also be subjected to a normal esterification reaction (for example, a reaction with alcohol corresponding to an alkyl group of target alkyl ester) to become an unsaturated group-containing ester compound of the present invention.

Examples of specific chemical structures of compounds that can be synthesized by the methods exemplified above are shown below. It is to be noted that the present invention is not limited to the compounds exemplified below.

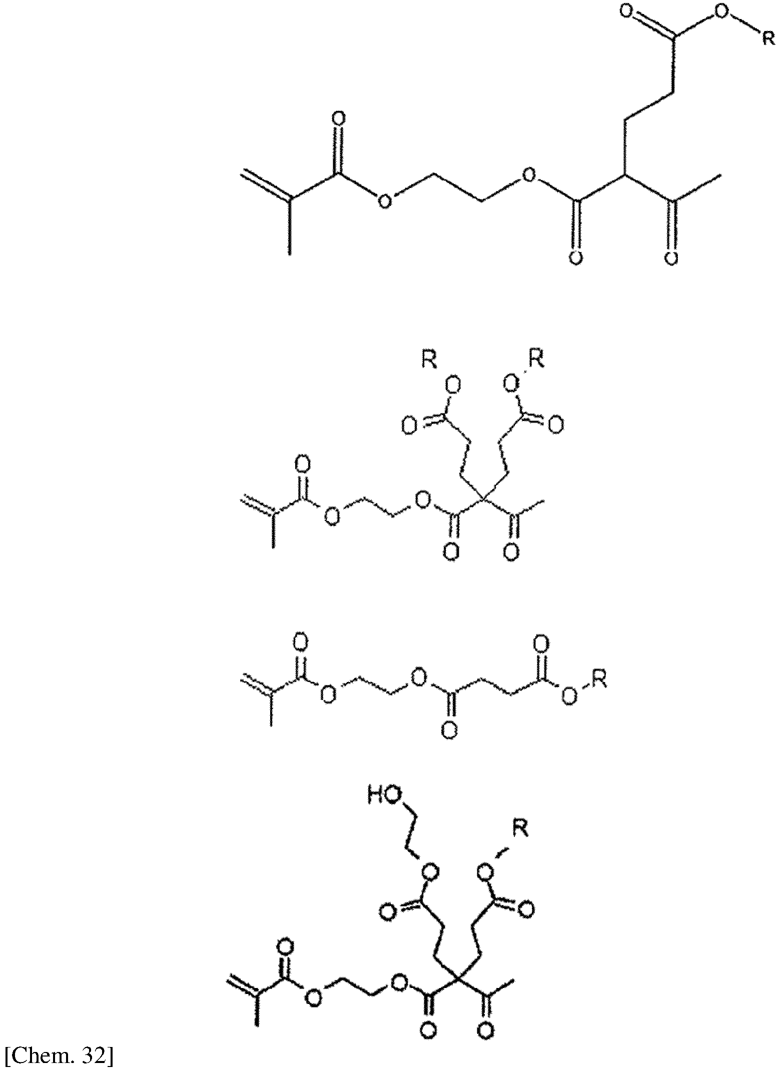

(in the above-mentioned general formula, R represents a primary or secondary alkyl group)

Also in the compound represented by the general formula, R in the general formula is an alkyl group having 50 or less carbon atoms, but the number of carbon atoms is preferably within the range of 1 to 20, more preferably within the range of 1 to 10, still more preferably within the range of 1 to 6, and most preferably within the range of 1 to 4. Within such a range, it is preferable in that the curing reaction can proceed suitably.

### (B-1-3)

A compound represented by the above-mentioned General formula (5) may be a compound having a functional group represented by the following General formula (31) and an unsaturated group.

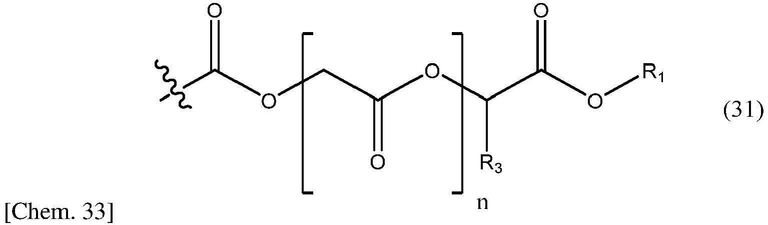

### n=0 to 20

R₁ is an alkyl group having 50 or less carbon atoms.

R₃ is hydrogen or an alkyl group having 10 or less carbon atoms.

That is, a compound having a structure represented by General formula (31) described in (A-2) in detail and an unsaturated group can be used.

Specifically, for example, when a compound represented by the above-mentioned General formula (32) is reacted with(meth)acrylic acid, a compound represented by the following General formula (36) is obtained.

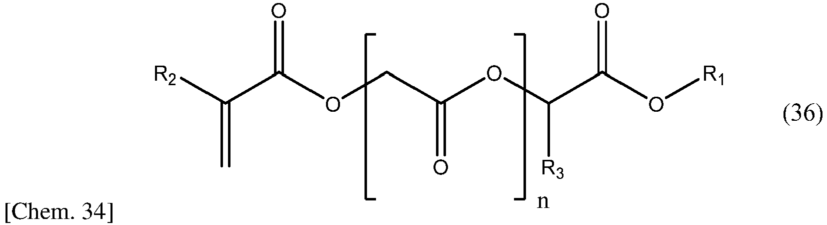

(in the formula, R₁ is an alkyl group having 50 or less carbon atoms.

R₂ is hydrogen or a methyl group.

n is 1 to 20.)

In addition, a compound obtained by reacting a compound having various unsaturated groups with a compound represented by the above-mentioned General formula (32) can be used.

### (B-1-4)

A compound represented by the above-mentioned General formula (5) may be a compound having a functional group represented by the following General formula (41) and/or a functional group represented by the following General formula (42), and an unsaturated group.

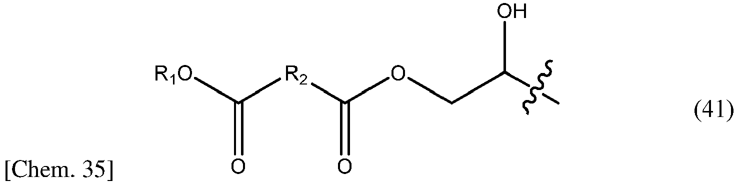

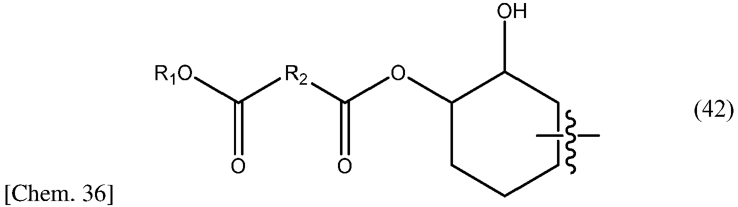

(in any one of the above-mentioned General formula (41) and General formula (42), R₁ is an alkyl group having 50 or less carbon atoms.

R₂ is an alkylene group having 50 or less carbon atoms that may contain an oxygen atom and a nitrogen atom as a portion thereof.)

That is, in a compound represented by General formula (5), a COORs group may have a structure represented by the above-mentioned General formula (41) and/or a structure represented by General formula (42).

The alkyl group in the above-mentioned alkyl ester group (that is, R₁ in the above-mentioned general formula) is an alkyl group having 50 or less carbon atoms, but the number of carbon atoms is preferably within the range of 1 to 20, more preferably within the range of 1 to 10, still more preferably within the range of 1 to 6, and most preferably within the range of 1 to 4. Within such a range, it is preferable that the curing reaction can proceed suitably.

As the above-mentioned alkyl group, known alkyl groups such as a methyl group, an ethyl group, a benzyl group, an n-propyl group, an isopropyl group, an n-butyl group, an isobutyl group, and a sec-butyl group can be specifically used.

The R₂ group in the above-mentioned General formula (41) is an alkylene group having 50 or less carbon atoms that may contain an oxygen atom and a nitrogen atom as a portion thereof, and specifically, may include a methylene group, an ethylene group, an n-propylene group, an i-propylene group, an n-butylene group, or a cyclic structure such as a benzene ring or a cyclohexyl ring (carbon chains 1 to 50). Among them, an ethylene group is particularly preferable because the ethylene group is made from an inexpensive raw material and has an excellent reactivity.

Examples of a compound having a structure represented by the above-mentioned General formula (41) may include a compound represented by the following General formula (43).

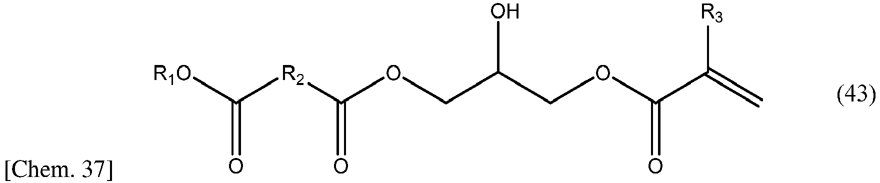

(in the formula, R₁ is an alkyl group having 50 or less carbon atoms.
R₂ is an alkylene group having 50 or less carbon atoms that may contain an oxygen atom and a nitrogen atom as a portion thereof.
R₃ is hydrogen or a methyl group.)

Among ester compounds represented by the above-mentioned General formula (43), an ester compound represented by the following General formula (45) is more preferable.

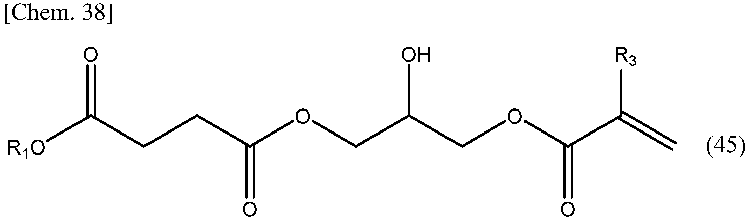

Examples of the polymerizable unsaturated monomer (b₂) copolymerizable with the hydroxyl group-containing polymerizable unsaturated monomer (bi) may include the following monomers (i) to (xix) and any combinations thereof.
(i) Alkyl or cycloalkyl(meth)acrylate:
   methyl(meth)acrylate, ethyl(meth)acrylate, n-propyl(meth)acrylate, isopropyl(meth)acrylate, n-butyl(meth)acrylate, isobutyl(meth)acrylate, tert-butyl(meth)acrylate, n-hexyl(meth)acrylate, n-octyl(meth)acrylate, 2-ethylhexyl(meth)acrylate, nonyl(meth)acrylate, tridecyl(meth)acrylate, lauryl(meth)acrylate, stearyl(meth)acrylate, isostearyl(meth)acrylate, cyclohexyl(meth)acrylate, methylcyclohexyl(meth)acrylate, tert-butylcyclohexyl(meth)acrylate, cyclododecyl(meth)acrylate, tricyclodecanyl(meth)acrylate, and the like
(ii) Polymerizable unsaturated monomer having an isobornyl group:
   isobornyl(meth)acrylate, and the like
(iii) Polymerizable unsaturated monomer having an adamantyl group:
   adamantyl(meth)acrylate, and the like
(iv) Polymerizable unsaturated monomer having a tricyclodecenyl group: tricyclodecenyl(meth)acrylate, and the like
(v) Aromatic ring-containing polymerizable unsaturated monomer: benzyl(meth)acrylate, styrene, α-methylstyrene, vinyltoluene, and the like
(vi) Polymerizable unsaturated monomer having an alkoxysilyl group: vinyltrimethoxysilane, vinyltriethoxysilane, vinyltris (2-methoxyethoxy) silane, γ-(meth)acryloyloxypropyltrimethoxysilane, γ-(meth)acryloyloxypropyltriethoxysilane, and the like
(vii) Polymerizable unsaturated monomer having a fluorinated alkyl group: perfluoroalkyl(meth)acrylates such as perfluorobutyl ethyl(meth)acrylate and perfluorooctylethyl(meth)acrylate; fluoroolefins, and the like
(viii) Polymerizable unsaturated monomer having a photopolymerizable functional group such as a maleimide group
(iv) Vinyl compound:
   N-vinyl pyrrolidone, ethylene, butadiene, chloroprene, vinyl propionate, vinyl acetate and the like
(x) Carboxyl group-containing polymerizable unsaturated monomer:
   (meth)acrylic acid, maleic acid, crotonic acid, β-carboxyethyl acrylate, and the like
(xi) Nitrogen-containing polymerizable unsaturated monomer:
   (meth)acrylonitrile,(meth)acrylamide, N, N-dimethylaminoethyl(meth)acrylate, N, N-diethylaminoethyl(meth)acrylate, N, N-dimethylaminopropyl(meth)acrylamide, methylene bis(meth)acrylamide, ethylenebis(meth)acrylamide, adducts of glycidyl(meth)acrylate and an amine compound, and the like
(xii) Polymerizable unsaturated monomer having two or more polymerizable unsaturated groups in one molecule:
   allyl(meth)acrylate, 1,6-hexanediol di(meth)acrylate, and the like
(xiii) Epoxy group-containing polymerizable unsaturated monomer:
   glycidyl(meth)acrylate, β-methylglycidyl(meth)acrylate, 3,4-epoxycyclohexylmethyl(meth)acrylate, 3,4-epoxycyclohexylethyl(meth)acrylate, 3,4-epoxycyclohexylpropyl(meth)acrylate, allyl glycidyl ether, and the like
(xiv)(meth)acrylate having a polyoxyethylene chain whose molecular terminal is an alkoxy group:
(xv) Polymerizable unsaturated monomer having a sulfonic acid group:
   2-acrylamido-2-methylpropanesulfonic acid, 2-sulfoethyl(meth)acrylate, allylsulfonic acid, 4-styrenesulfonic acid and the like; sodium salts and ammonium salts and the like of these sulfonic acids
(xvi) Polymerizable unsaturated monomer having a phosphoric acid group: acid phosphoxyethyl(meth)acrylate, acid phosphoxypropyl(meth)acrylate, acid phosphoxy poly (oxyethylene) glycol(meth)acrylate, acid phosphoxy poly (oxypropylene) glycol(meth)acrylate, and the like
(xvii) Polymerizable unsaturated monomer having an ultraviolet absorbing functional group: 2-hydroxy-4-(3-methacryloyloxy-2-hydroxypropoxy) benzophenone, 2-hydroxy-4-(3-acryloyloxy-2-hydroxypropoxy) benzophenone, 2,2'-dihydroxy-4-(3-methacryloyloxy-2-hydroxypropoxy) benzophenone, 2,2'-dihydroxy-4-(3-acryloyloxy-2-hydroxypropoxy) benzophenone, 2-(2'-hydroxy-5'-methacryloyloxyethylphenyl) -2H-benzotriazole, and the like
(xviii) Ultraviolet stable polymerizable unsaturated monomer:
   4-(meth)acryloyloxy-1,2,2,6,6-pentamethylpiperidine, 4-(meth)acryloyloxy-2,2,6,6-tetramethylpiperidine, 4-cyano-4-(meth)acryloylamino-2,2,6,6-tetramethylpiperidine, 1-(meth)acryloyl-4-(meth)acryloylamino-2,2,6,6-tetramethylpiperidine, 1-(meth)acryloyl-4-cyano-4-(meth)acryloylamino-2,2,6,6-tetramethylpiperidine, 4-crotonoyloxy-2,2,6,6-tetramethylpiperidine, 4-crotonoylamino-2,2,6,6-tetramethylpiperidine, 1-crotonoyl-4-crotonoyloxy-2,2,6,6-tetramethylpiperidine and the like
(xiv) Polymerizable unsaturated monomer having a carbonyl group:
   acrolein, diacetone acrylamide, diacetone methacrylamide, acetoacetoxyethyl methacrylate, formylstyrene, vinyl alkyl ketone having approximately 4 to approximately 7 carbon atoms (for example, vinyl methyl ketone, vinyl ethyl ketone, vinyl butyl ketone), and the like

In the present specification, "polymerizable unsaturated group" means an unsaturated group capable of radical polymerization or ionic polymerization. Examples of the polymerizable unsaturated group include a vinyl group and a(meth)acryloyl group.

The proportion of the hydroxyl group-containing polymerizable unsaturated monomer (bi) at the time of producing the acrylic polyol (B-1) is preferably 0.5 to 50% by weight based on the total amount of monomer components. Within such a range, it is possible to cause an appropriate crosslinking reaction and obtain excellent physical properties of a coating film.

The lower limit is more preferably 1.0% by weight, and still more preferably 1.5% by weight. The upper limit is more preferably 40% by weight.

From the viewpoint of water resistance and the like of a coating film to be formed, a hydroxyl value of the acrylic polyol (B-1) is preferably 1 to 200 mgKOH/g. The above-mentioned lower limit is more preferably 2 mgKOH/g, and further preferably 5 mgKOH/g. The above-mentioned upper limit is more preferably 180 mgKOH/g, and further preferably 170 mgKOH/g.

As such an acrylic polyol (B-1), a commercially available acrylic polyol can also be used. The commercially available acrylic polyol is not particularly limited, and examples thereof may include ACRYDIC A-801-P, A-817, A-837, A-848-RN, A-814, 57-773, A-829, 55-129, 49-394-IM, A-875-55, A-870, A-871, A-859-B, 52-668-BA, WZU-591, WXU-880, BL-616, CL-1000, CL-408, and the like manufactured by DIC corporation.

### (B-2) Polyester polyol

The polyester polyol (B-2) can usually be produced by an esterification reaction or a transesterification reaction of an acid component and an alcohol component.

As the above-mentioned acid component, a compound which is ordinarily used as an acid component in the production of a polyester resin can be mentioned. Examples of the acid component include aliphatic polybasic acids, alicyclic polybasic acids, aromatic polybasic acids and the like, and anhydrides and esterified products thereof.

As the above-mentioned aliphatic polybasic acid, and anhydride and esterified product thereof, aliphatic compounds having two or more carboxyl groups in one molecule, an acid anhydride of the aliphatic compound and an esterified product of the aliphatic compound are generally mentioned, for example, aliphatic polyvalent carboxylic acids such as succinic acid, glutaric acid, adipic acid, pimelic acid, suberic acid, azelaic acid, sebacic acid, undecane diacid, dodecanedioic acid, brassylic acid, octadecanedioic acid, citric acid, and butanetetracarboxylic acid; anhydrides of the above-mentioned aliphatic polyvalent carboxylic acids; esterified products of lower alkyl having approximately 1 to approximately 4 carbon atoms of the aliphatic polyvalent carboxylic acid, and the like, and any combinations thereof may be mentioned.

The aliphatic polybasic acid is preferably adipic acid and/or adipic anhydride from the viewpoint of the smoothness of the coating film to be obtained.

The above-mentioned alicyclic polybasic acids, and their anhydrides and esterified products are generally compounds having one or more alicyclic structures and two or more carboxyl groups in one molecule, acid anhydrides of the above-mentioned compounds and esterified products of the above-mentioned compounds. The alicyclic structure is mainly a 4- to 6-membered ring structure. Examples of the alicyclic polybasic acid and anhydride and esterified product thereof include the alicyclic polyvalent carboxylic acids such as 1,2-cyclohexanedicarboxylic acid, 1,3-cyclohexanedicarboxylic acid, 1,4-cyclohexanedicarboxylic acid, 4-cyclohexene-1, 2-dicarboxylic acid, 3-methyl-1,2-cyclohexanedicarboxylic acid, 4-methyl-1,2-cyclohexanedicarboxylic acid, 1,2,4-cyclohexanetricarboxylic acid, 1,3,5-cyclohexanetricarboxylic acid and the like; anhydrides of the alicyclic polyvalent carboxylic acids; esterified products of the lower alkyl having approximately 1 to approximately 4 carbon atoms of the alicyclic polyvalent carboxylic acid, and the like; and any combinations thereof may be mentioned.

From the viewpoint of the smoothness of the coating film to be obtained, it is preferable to use 1,2-cyclohexanedicarboxylic acid, 1,2-cyclohexanedicarboxylic anhydride, 1,3-cyclohexanedicarboxylic acid, 1,4-cyclohexanedicarboxylic acid, 4-cyclohexene-1,2-dicarboxylic acid and 4-cyclohexene-1,2-dicarboxylic anhydride, and 1,2-cyclohexane dicarboxylic acid and/or 1,2-cyclohexanedicarboxylic anhydride is more preferable.

The above-mentioned aromatic polybasic acid and their anhydride and esterified product may generally include aromatic polyvalent carboxylic acids such as an aromatic compound having two or more carboxyl groups in one molecule, an acid anhydride of the aromatic compound and an esterified product of the aromatic compound including phthalic acid, isophthalic acid, terephthalic acid, naphthalene dicarboxylic acid, 4,4'-biphenyl dicarboxylic acid, trimellitic acid, pyromellitic acid and the like; acid anhydride of the aromatic polyvalent carboxylic acid, esterified products of lower alkyl having approximately 1 to approximately 4 carbon atoms of the aromatic polyvalent carboxylic acid, and the like, and any combinations thereof.

As the above-mentioned aromatic polybasic acid and their anhydride and esterified product, phthalic acid, phthalic anhydride, isophthalic acid, trimellitic acid, and trimellitic anhydride are preferable.

Further, as the acid component, acid components other than the aliphatic polybasic acid, the alicyclic polybasic acid and the aromatic polybasic acid, for example, fatty acids such as coconut oil fatty acid, cottonseed oil fatty acid, hemp oil fatty acid, rice bran oil fatty acid, fish oil fatty acid, tall oil fatty acid, soybean oil fatty acid, linseed oil fatty acid, tung oil fatty acid, rapeseed oil fatty acid, castor oil fatty acid, dehydrated castor oil fatty acid, safflower oil fatty acid and the like; monocarboxylic acids such as lauric acid, myristic acid, palmitic acid, stearic acid, oleic acid, linoleic acid, linolenic acid, benzoic acid, p-tert-butylbenzoic acid, cyclohexanoic acid, 10-phenyloctadecanoic acid and the like; hydroxy carboxylic acids such as lactic acid, 3-hydroxybutanoic acid, 3-hydroxy-4-ethoxybenzoic acid, and the like, and any combination thereof may be mentioned.

As the alcohol component, a polyhydric alcohol having two or more hydroxyl groups in one molecule may be used. The polyhydric alcohol may include, for example, dihydric alcohols such as ethylene glycol, propylene glycol, diethylene glycol, trimethylene glycol, tetraethylene glycol, triethylene glycol, dipropylene glycol, 1,4-butanediol, 1,3-butanediol, 2,3-butanediol, 1,2-butane diol, 2-methyl-1,3-propanediol, 3-methyl-1,2-butanediol, 1,1,1-trimethylolpropane, 2-butyl-2-ethyl-1,3-propanediol, 1,2-pentanediol, 1,5-pentanediol, 1,4-pentanediol, 2,4-pentanediol, 2,3-dimethyltrimethylene glycol, tetramethylene glycol, 3-methyl-4,3-pentanediol, 3-methyl-1,5-pentanediol, 2,2,4-trimethyl-1,3-pentanediol, 1,6-hexanediol, 1,5-hexanediol, 1,4-hexanediol, 2,5-hexanediol, neopentyl glycol, 1,4-cyclohexanedimethanol, tricyclodecanedimethanol, hydroxypivalic acid neopentyl glycol ester, hydrogenated bisphenol A, hydrogenated bisphenol F, and dimethylolpropionic acid; polylactone diol obtained by adding a lactone compound such as ε-caprolactone to the dihydric alcohol; ester diol compounds such as bis (hydroxyethyl) terephthalate; polyether diol compounds such as alkylene oxide adducts of bisphenol A, polyethylene glycol, polypropylene glycol and polybutylene glycol; trihydric or higher alcohol such as glycerin, trimethylolethane, trimethylolpropane, diglycerin, triglycerin, 1,2,6-hexanetriol, pentaerythritol, dipentaerythritol, tris (2-hydroxyethyl) isocyanuric acid, sorbitol, and mannitol; a polylactone polyol compound obtained by adding a lactone compound such as ε-caprolactone to the trihydric or higher alcohol; fatty acid esterified products of glycerin, and the like.

As the above-mentioned alcohol component, an alcohol component other than the polyhydric alcohol, for example, a monoalcohol such as methanol, ethanol, propyl alcohol, butyl alcohol, stearyl alcohol or 2-phenoxyethanol; and an alcohol compound obtained by reacting a monoepoxy compound such as propylene oxide, butylene oxide, "Cardura E10" (trade name, glycidyl esters of synthetic hyperbranched saturated fatty acids, manufactured by HEXION Specialty Chemicals, Inc.) with an acid may be used.

The polyester polyol (B-2) is not particularly limited, and it can be produced by a usual method. For example, the acid component and the alcohol component are heated in a nitrogen stream at approximately 150 to approximately 250°C. for approximately 5 to approximately 10 hours to carry out esterification reaction or transesterification reaction of the acid component and the alcohol component, thereby the polyester polyol (B-2) can be produced.

As the above-mentioned polyester polyol, a commercially available resin can also be used. Examples of a commercially available polyester resin may include ARAKYD series (product name, manufactured by Arakawa Chemical Industries, Ltd.), VYLON series (product name, manufactured by Toyobo Co., Ltd.), BECKOLITE series (manufactured by DIC corporation), ADEKA NEW ACE series (manufactured by ADEKA corporation), and the like.

In a case where the above-mentioned polyol (B) is the above-mentioned acrylic polyol or polyester polyol, the molecular weight thereof is not particularly limited, but a weight average molecular weight thereof is preferably, for example, 3,000 to 300,000. An upper limit of the weight average molecular weight of the above-mentioned polyol (B) is more preferably 100,000, further preferably 50,000, and still further preferably 30,000. A lower limit of the weight average molecular weight of the above-mentioned polyol (B) is further preferably 5,000.

(B-3) Low molecular weight polyol

Examples of the polyol (B) that can be used in the present invention may include low molecular weight polyol compounds having two or more hydroxyl groups.

The low molecular weight polyol compound that can be used here is not particularly limited, and examples thereof may include dihydric alcohols such as ethylene glycol, propylene glycol, diethylene glycol, trimethylene glycol, tetraethylene glycol, triethylene glycol, dipropylene glycol, 1,4-butanediol, 1,3-butanediol, 2,3-butanediol, 1,2-butanediol, 2-methyl-1,3-propanediol, 3-methyl-1,2-butanediol, 1,1,1-trimethylolpropane, 2-butyl-2-ethyl-1,3-propanediol, 1,2-pentanediol, 1,5-pentanediol, 1,4-pentanediol, 2,4-pentanediol, 2,3-dimethyltrimethylene glycol, tetramethylene glycol, 3-methyl-4,3-pentanediol, 3-methyl-1,5-pentanediol, 2,2,4-trimethyl-1,3-pentanediol, 1,6-hexanediol, 1,5-hexanediol, 1,4-hexanediol, 2,5-hexanediol, neopentyl glycol, 1,4-cyclohexanedimethanol, tricyclodecanedimethanol, hydroxypivalic acid neopentyl glycol ester, hydrogenated bisphenol A, hydrogenated bisphenol F, and dimethylolpropionic acid; polylactone diols obtained by adding a lactone compound such as ε-caprolactone to the dihydric alcohols; ester diol compounds such as bis (hydroxyethyl) terephthalate; polyether diol compounds such as alkylene oxide adducts of bisphenol A, polyethylene glycol, polypropylene glycol and polybutylene glycol; trihydric or higher hydric alcohol such as glycerin, trimethylolethane, trimethylolpropane, diglycerin, triglycerin, 1,2,6-hexanetriol, pentaerythritol, dipentaerythritol, tris (2-hydroxyethyl) isocyanuric acid, sorbitol, mannitol, cyclodextrin, and cellulose; and the like. Meanwhile, the "low molecular weight polyol" mentioned herein refers to a polyol having a molecular weight of 3000 or less. Here, the molecular weight is a value calculated according to a chemical structure clarified by general-purpose chemical analysis such as NMR or mass spectrometry. The above-mentioned molecular weight is more preferably 2500 or less, and most preferably 2000 or less.

In addition, the hydroxyl group is most preferably a primary hydroxyl group that is less affected by steric hindrance.

As for the thermosetting resin composition using such a low molecular weight polyol, the low molecular weight polyol to be used is known as a general purpose product and can be obtained at low cost. Further, the low molecular weight polyol has high water solubility and can be suitably used as a crosslinking agent in the case of curing in water-borne system. In recent years, environmental problems are attracting attention, and it can be suitably used as a very important crosslinking agent in promoting the reduction of VOC.

It is preferable that the thermosetting resin composition of the present invention contain the polyol (B) in a proportion of 1 to 99% by weight with respect to a total amount of composition (in solid basis). A lower limit of the above-mentioned content is more preferably 5% by weight, and further preferably 10% by weight. An upper limit of the above-mentioned content is more preferably 90% by weight, and further preferably 80% by weight.

The above-mentioned polyol (B) may be a polyol in which a resin such as an acrylic polyol or a polyester polyol and a low molecular weight polyol are used in combination.

In particular, in a case where a low molecular weight compound is used as the above-mentioned (A) component, it is preferable to use the acrylic polyol (B-1) and/or polyester polyol (B-2) and the low molecular weight polyol (B-3) in combination.

A crosslinked chain can be generated between (A) components having a low molecular weight by using a low molecular weight polyol, and thus it is possible to obtain a cured material having a high crosslinking density and improve physical properties of the cured material, which is preferable.

Further, the content of low molecular weight components can be increased throughout a composition. For this reason, the viscosity of the composition can be lowered.

For example, in a case where the thermosetting resin composition of the present invention is configured as a coating material composition, it is necessary to adjust the viscosity thereof so that spray coating can be performed. In this case, an organic solvent is generally added in order to obtain an optimum viscosity.

As described above, when the viscosity of the thermosetting resin composition can be reduced, there is an advantage in that it is possible to achieve the high solidification of the composition and reduce the amount of solvent used.

In addition, a thermosetting resin composition in which a polyester polyol is combined with the above-mentioned (A) component is preferable in that a film having excellent flexibility, glossiness, and adhesion can be formed.

In a case where the above-mentioned acrylic polyol (B-1) and/or the above-mentioned polyester polyol (B-2) is used in combination with the low molecular weight polyol (B-3), it is preferable to set a mixing ratio such that a weight% of (B-3) with respect to [a total amount of (B-1) and (B-2)] is in a range of 0.5 to 50. Such a range is particularly preferable in that satisfactory curing performance is obtained.

In the present invention, it is preferable that a ratio of a hydroxyl group to an alkyl ester group be 1:100 to 100:1 in a state where the above-mentioned compound (A) and the polyol (B) are mixed. Such a mixing ratio is preferable in that satisfactory curability is obtained.

### (C) Transesterification catalyst

The thermosetting resin composition of the present invention contains a transesterification catalyst (C). That is, the transesterification catalyst (C) is added to generate a transesterification reaction between the ester group and the hydroxyl group efficiently and obtain sufficient thermosetting property.

As the transesterification catalyst (C), any known compound capable of activating the transesterification reaction can be used.

Specifically, examples thereof may include various acidic compounds such as hydrochloric acid, sulfuric acid, nitric acid, acetic acid, phosphoric acid or sulfonic acid, and heteropolyacids; various basic compounds such as LiOH, KOH or NaOH, amines, and phosphines; various metal compounds such as PbO, magnesium oxide, zinc acetate, zinc acrylate, zinc acetylacetonate, zinc oxide, lead acetate, manganese acetate, copper acetate, nickel acetate, palladium acetate, aluminum isopropylate, alumina, zirconium acetylacetonate, zirconium oxide, iron chloride, cobalt chloride, palladium chloride, zinc dithiocarbamate, antimony trioxide, tetraisopropyl titanate, titanium oxide, dibutyltin dilaurate, dibutyltin dioctate, dioctyltin diacetate, monobutyltin oxide, or monobutyltin acid; quaternary ammonium salts such as tetramethylammonium chloride, dodecyltrimethylammonium bromide, triethylbenzylammonium chloride, tetramethylammonium hydroxide, and trimethylbenzylammonium methylcarbonate, phosphonium salts such as tetrabutylphosphonium bromide and tetrabutylphosphonium hydroxide, strong bases such as 1,8-diazabicyclo [5.4.0] undecene-7, and the like. In addition, photoresponsive catalysts and thermal latent catalysts that generate acid by light or heat can also be used. Further, a zinc cluster catalyst (for example, ZnTAC24 (trade name) manufactured by Tokyo Chemical Industry Co., Ltd.) and the like can also be used.

Further, among the above-mentioned compounds, two or more types may be used in combination.

In the present invention, it is most preferable that a metal compound catalyst be used as a transesterification catalyst. The transesterification reactivity of the metal compound catalyst can be obtained by selecting a metal species, using the metal compound catalyst in combination with other compounds, or the like. Further, required performance can be appropriately obtained when the metal compound catalyst is combined with a resin composition, which is preferable.

It is preferable that the above-mentioned metal compound catalyst be a compound (C-1) containing at least one metal element selected from the group consisting of zinc, tin, titanium, aluminum, zirconium and iron. Such compounds have a suitable transesterification reactivity, which is preferable.

In the above-mentioned metal compound, when metal acetylacetonate is used as an anion component, a more excellent transesterification ability than that of the same type of metal compound tends to be obtained, which is preferable. For example, zinc acetylacetoneate and zirconium acetylacetoneate can be used particularly suitably.

In a case where the above-mentioned metal compound is used as a catalyst and at least one compound (C-2) selected from the group consisting of an organophosphorus compound, urea, alkylated urea, a sulfoxide compound, pyridine, and pyridine derivatives is used in combination, catalyst performance is improved, which is more preferable.

The use of a metal compound activated by using these compounds in combination is particularly preferable in that the above-mentioned curing start temperature and gel fraction can be obtained.

Although an action for obtaining such an effect is not clear, it is presumed that the coordination of the compound (C-2) with a metal compound improves the catalytic activity. Therefore, as the compound (C-2), it is preferable to select a compound that can be coordinated with a metal compound.

The above-mentioned organophosphorus compound is not particularly limited, and examples thereof may include phosphoric acid, phosphorous acid, phosphonic acid, phosphinic acid, phosphonious acid, organic phosphine oxide, organic phosphine compounds and their various esters, amides, and salts. Ester may be ester of alkyl, branched alkyl, substituted alkyl, bifunctional alkyl, alkyl ether, aryl, and substituted aryl. Amide may be amide of alkyl, branched alkyl, substituted alkyl, bifunctional alkyl, alkyl ether, aryl, and substituted aryl.

Among these, at least one compound selected from the group consisting of phosphonate ester, phosphate amide, and an organic phosphine oxide compound is particularly preferable. The most satisfactory transesterification catalyst function is obtained by using these organophosphorus compounds. Further specifically, organic phosphine oxide compounds such as triphenylphosphine oxide, trioctylphosphine oxide, and tricyclohexylphosphine oxide; phosphate amide compounds such as hexamethylphosphoric acid triamide and tris (N, N-tetramethylene) phosphate triamide, organic phosphine sulfide compounds such as triphenylphosphine sulfide, tributylphosphine sulfide, and trioctylphosphine sulfide, and the like can be suitably used.

The above-mentioned alkylated urea is not particularly limited, and examples thereof may include urea, dimethylurea, dimethylpropylene urea, and the like. Meanwhile, alkylated urea may have a cyclic structure as in dimethylpropylene urea or the like.

The above-mentioned alkylated thiourea is not particularly limited, and examples thereof may include dimethyl thiourea, and the like.

Examples of above-mentioned sulfoxide compound may include dimethyl sulfoxide, diphenyl sulfoxide, and the like.

Examples of the above-mentioned pyridine derivative may include quinoline, isoquinoline, nicotinic acid ester, and the like.

It is preferable that a transesterification catalyst of the present invention contain the compound (C-1) and the compound (C-2) at a ratio of (C-1):(C-2) = 100:1 to 1:100 (weight ratio). Particularly suitable results can be obtained by mixing the compounds at such a ratio. The above-mentioned lower limit is more preferably 50:1 and further preferably 10:1. The above-mentioned upper limit is more preferably 1:50 and further preferably 1:10.

It is preferable that the above-mentioned compound (C-1) be contained in a proportion of 0.01 to 50% by weight with respect to the amount of a compound related to a reaction in a reaction system at the time of causing a reaction.

It is preferable that the above-mentioned compound (C-2) be contained in a proportion of 0.01 to 50% by weight with respect to the amount of a compound related to a reaction in a reaction system at the time of causing a reaction.

Further, in the thermosetting resin composition of the present invention, a satisfactory curing reaction can be caused without using an acid catalyst, and thus the thermosetting resin composition can be configured as a thermosetting resin composition having a basic compound added thereto, which is preferable.

That is, an amine compound may be used as an additive such as a pigment dispersant. Further, when a coating material is made aqueous, introducing an acid group such as a carboxylic acid group or a sulfonic acid group into a resin and neutralizing it with an amine compound or the like to make the coating material water-soluble have been widely performed. In this case, combination use with an acidic catalyst was difficult. This has been a problem that hinders a thermosetting resin composition, using an esterification catalyst as a curing reaction, from being made aqueous. In the present invention, curing can be performed even under basic conditions.

In addition, even when the thermosetting resin composition of the present invention is used as a solvent-based coating material composition, an aqueous coating material may be used in combination as a partial layer among multiple coating films. In this case, when the multiple coating films are heated and cured at the same time, amines, ammonia, and the like may be generated from the other layers forming the multiple coating films. Even in such a case, satisfactory curing can be performed, which is preferable.

The amount of transesterification catalyst (C) used is preferably 0.01 to 50% by weight with respect to a total weight of the compound (A) and the polyol (B). Within such a range, a satisfactory curing reaction can be performed at a low temperature, which is preferable.

The form of the thermosetting resin composition of the present invention is not particularly limited, but it is particularly preferable that the thermosetting resin composition have an organic solvent-based or water-based form. Thereby, thin film coating can be performed, and this is preferable in that low temperature curing can be performed. The water-based form may be either a water-soluble form or a water-dispersible form, and the thermosetting resin composition may contain an aqueous solvent that can be mixed with water such as ethanol, methanol, alcohol, glycol, ether, and ketone at an arbitrary ratio, in addition to water.

The organic solvent-type thermosetting resin composition is a composition in which the above-mentioned components are dissolved or dispersed in various organic solvents. The organic solvent that can be used is not particularly limited, and examples thereof include hydrocarbons such as hexane, octane, decane, tetradecane, cyclohexane, benzene and xylene, ethers such as dimethyl ether and diethyl ether, ketones such as acetone, and methyl ethyl ketone, chlorinated hydrocarbons such as trichloromethane, carbon tetrachloride, dichloroethane, trichloroethane, tetrachloroethylene and the like, and any known ones such as ethanol, methanol, propanol, butanol, acetone, cyclohexanone and the like.

In a case where the thermosetting resin composition of the present invention is a solvent-based composition, a composition having a high solid content can be configured. Specifically, it is preferable because the thermosetting resin composition can satisfy a condition that the viscosity at 25°C is 200 mPa·s or less when a solid content is 55% by weight or more in a state where the thermosetting resin composition does not contain an additive such as a pigment and contains only the components (A) to (C) and a solvent.

Meanwhile, the above-mentioned "the viscosity at 25°C is 200 mPa·s or less when a solid

content is 55% by weight or more in a state where the thermosetting resin composition contains only the components (A) to (C) and a solvent" means that a viscosity measured using only a resin component constituting the thermosetting resin composition satisfies the above-mentioned range, and the thermosetting resin composition may be a thermoplastic resin composition containing only such a

resin composition or may be a resin composition satisfying such parameters and being mixed with various additives including pigments.

In addition, as a two-component resin composition, a solution containing the compound (A) and a main agent solution containing the polyol (B) may be combined immediately before use and used. This is preferable in that storage stability becomes satisfactory. In addition, it is also possible to use a two-component type in which a catalyst solution containing the transesterification catalyst (C) is mixed with a solution containing the compound (A) and the polyol (B).

Further, in a case where a powder-shaped thermosetting resin composition such as a powder coating material is configured, the thermosetting resin composition can be produced by drying, mixing, and pulverizing the compound (A), the polyol (B), and the transesterification catalyst (C) by a normal method.

The thermosetting resin composition of the present invention may further be used in combination with other crosslinking agents commonly used in the fields of coating materials and adhesives in addition to the above-mentioned components (A) to (C). The crosslinking agent that can be used is not particularly limited, and examples thereof include an isocyanate compound, a blocked isocyanate compound, a melamine resin, an epoxy resin, a silane compound, and the like. In addition, vinyl ether, an anionic polymerizable monomer, a cationic polymerizable monomer, and a radical polymerizable monomer, and the like may be used in combination. A curing agent for accelerating the reaction of the used crosslinking agent may be used in combination.

Meanwhile, the above-mentioned other crosslinking agents are not essential, and the thermosetting resin composition of the present invention can obtain satisfactory curability even when the thermosetting resin composition does not contain the crosslinking agents.

The thermosetting resin composition of the present invention may contain a non-aqueous dispersion resin (NAD) depending on a purpose if necessary. However, the non-aqueous dispersion resin (NAD) is not essential and may not be contained.

The thermosetting resin composition of the present invention can be suitably used in the fields of thermosetting coating materials, thermosetting adhesives, and the like.

In a case where the aqueous thermosetting resin composition is used as a thermosetting coating material, an additive which is generally used in the field of coating materials, other than the above-mentioned components, may be used in combination. For example, a coloring pigment, an extender pigment, a bright pigment, and any combinations thereof may be used.

When a pigment is used, it is preferably contained in a total amount of 1 to 500% by weight, based on 100% by weight of the total solid content of the resin component. The lower limit is more preferably 3% by weight, and still more preferably 5 parts by weight. The upper limit is more preferably 400% by weight, and still more preferably 300% by weight.

Examples of the coloring pigment include titanium oxide, zinc white, carbon black, molybdenum red, prussian blue, cobalt blue, azo pigment, phthalocyanine pigment, quinacridone pigment, isoindoline pigment, threne pigment, perylene pigment, dioxazine type pigment, diketopyrrolopyrrole type pigment, and the like, and any combination thereof.

Examples of the extender pigment include clay, kaolin, barium sulfate, barium carbonate, calcium carbonate, talc, silica, alumina white and the like, and barium sulfate and/or talc is preferable, and barium sulfate is more preferable.

Examples of the bright pigment include, for example, aluminum oxide coated with aluminum (including vapor-deposited aluminum), copper, zinc, brass, nickel, aluminum oxide, mica, titanium oxide or iron oxide, mica coated with titanium oxide or iron oxide, glass flakes, hologram pigments, and the like, and any combinations thereof. The aluminum pigment includes nonleafing type aluminum and leafing type aluminum.

The above-mentioned thermosetting coating material may further contain additives for a coating material such as a thickener, an ultraviolet absorber, a light stabilizer, a defoaming agent, a plasticizer, an organic solvent other than the above-mentioned hydrophobic solvent, a surface conditioner, and an anti-settling agent, as desired.

Examples of the thickener include inorganic thickeners such as silicate, metal silicate, montmorillonite, colloidal alumina and the like; polyacrylic acid thickeners such as copolymers of (meth)acrylic acid and(meth)acrylic acid ester, and sodium polyacrylate; associative type thickener having a hydrophilic part and a hydrophobic part in one molecule and showing a thickening effect by an adsorption of the hydrophobic portion on the surface of the pigment or emulsion particle in the coating, or an association of the hydrophobic parts, in an aqueous medium; cellulose derivative thickeners such as carboxymethylcellulose, methylcellulose, hydroxyethylcellulose and the like; protein type thickeners such as casein, sodium caseinate, ammonium caseinate and the like; alginic acid thickeners such as sodium alginate; polyvinyl thickeners such as polyvinyl alcohol, polyvinyl pyrrolidone, polyvinyl benzyl ether copolymers; polyether thickeners such as pluronic polyethers, polyether dialkyl esters, polyether dialkyl ethers, polyether epoxy modified products and the like; maleic anhydride copolymer type thickener such as a partial ester of vinyl methyl ether-maleic anhydride copolymer; polyamide type thickeners such as a polyamide amine salt, and the like, and any combination thereof.

The polyacrylic acid thickener is commercially available, and examples thereof include "ACRYSOLASE-60", "ACRYSOLTT-615", and "ACRYSOLRM-5" (trade names) manufactured by Rohm and Haas Company, and "SN Thickener 613", "SN Thickener 618", "SN Thickener 630", "SN Thickener 634", and "SN Thickener 636" (trade names) manufactured by San Nopco CO., LTD..

The associative type thickener is commercially available, and examples thereof include "UH-420", "UH-450", "UH-462", "UH-472", "UH-540", "UH-752", "UH-756VF", and "UH-814N" (trade names) manufactured by ADEKA Corporation, "ACRYSOLRM-8W", "ACRYSOLRM-825", "ACRYSOLRM-2020NPR", "ACRYSOLRM-12W", and "ACRYSOLSCT-275" (trade names) manufactured by Rohm and Haas Company, "SN Thickner 612", "SN Thickener 621 N", "SN Thickener 625 N", "SN Thickener 627 N", and "SN Thickener 660 T" (trade names) manufactured by SAN NOPCO CO., LTD. and the like.

The object to which the thermosetting coating can be applied is not particularly limited, and examples thereof include an outer plate portion of an automobile body such as a passenger car, a truck, a motorcycle, and a bus; an automobile part; house electrical products such as a mobile phone, an audio device, and the like, building materials, furniture, adhesives, film and glass coating agents, and the like. When used as an automotive coating, it can be used for the effect of an arbitrary layer such as an intermediate coating, a base coating and a clear coating.

The object to be coated may be one obtained by applying a surface treatment such as a phosphate treatment, a chromate treatment, a composite oxide treatment or the like to the metal surface of the metal material and a car body molded therefrom, or may be a substrate to be coated having a coating film.

As the above-mentioned substrate to be coated having the coating film, there can be mentioned a substrate which is subjected to a surface treatment as desired and has an undercoating film formed thereon. In particular, a car body having an undercoating film formed by an electrodeposition coating is preferable, and a car body having an undercoating film formed by a cationic electrodeposition coating is more preferable.

The substrate to be coated may be one obtained by subjecting the surface of plastic such as plastic material and automobile part molded therefrom to surface treatment, primer coating or the like as desired. Further, the plastic material and the metal material may be combined. Since the thermosetting resin composition of the present invention can be made low-temperature curable, it can also be suitably used as a paint for plastics.

The method of applying the thermosetting coating is not particularly limited, and examples thereof include an air spray coating, an airless spray coating, a rotary atomization coating, a curtain coating and the like, and air spray coating, rotary atomization coating, and the like are preferable. At the time of coating, electrostatic application may be performed as desired. By the above-mentioned coating method, a wet coating film can be formed from the water-borne coating material composition.

The wet coating film can be cured by heating. The curing can be carried out by a known heating means, for example, a drying oven such as an air-heating furnace, an electric furnace, an infrared induction heating furnace or the like. The wet coating film is preferably cured by heating at a temperature in the range of about 80 to about 180°C, more preferably about 100 to about 170°C, and even more preferably about 120 to about 160°C, and preferably for about 10 to about 60 minutes, and more preferably for about 15 to about 40 minutes. It is also preferable in that it can cope with low temperature curing at 80 to 140°C.

When the thermosetting resin composition of the present invention is used in the field of coating material, sufficient curing performance such as smoothness, water resistance, acid resistance, and the like is required.

On the other hand, when it is used in the field of adhesives, pressure sensitive adhesives and the like, high curing performance required for coating material is not required. The thermosetting resin composition of the present invention can be brought to a level that can be used as a coating, but compositions which do not reach such a level may be usable in the fields of adhesives, pressure sensitive adhesives and the like.

The present invention is a cured film formed by three-dimensionally crosslinking the thermosetting resin composition described above.

Such a cured film has sufficient performance so that it can be used as a coating/adhesive. Examples

Hereinafter, the present disclosure will be explained with reference to examples. However, the present disclosure is not limited to these examples. In addition, "part (s) " means "part (s) by weight" in the examples.

### (Synthesis Example 1)

54 parts of ethylene glycol monoacetoacetate monomethacrylate, 58 parts of n-butyl acrylate, 38 parts of potassium carbonate, 2 parts of 18-crown-6 ether, and 112 parts of tetrahydrofuran were mixed and stirred at 50°C for 3 hours. After the completion of the reaction, cyclohexane and water were added and washed with water. An organic layer was neutralized with a saturated aqueous ammonium chloride solution and washed twice with water, and the obtained organic layer was concentrated under reduced pressure to obtain a monomer A.

### (Synthesis Example 2)

54 parts of ethylene glycol monoacetoacetate monomethacrylate, 43 parts of methyl acrylate, 33 parts of potassium carbonate, 2 parts of 18-crown-6 ether, and 97 parts of tetrahydrofuran were mixed and stirred at 50°C for 3 hours. After completion of the reaction, cyclohexane and water were added, and followed by washing with water. The organic layer was neutralized with a saturated aqueous solution of ammonium chloride and washed twice with water, and the obtained organic layer was concentrated under reduced pressure to obtain a monomer B.

### (Synthesis Example 3)

240 parts of n-butyl methacrylate (a product manufactured by Kyoeisha Chemical Co., Ltd.: Light Ester NB), 110 parts of hydroxyethyl methacrylate (a product manufactured by Kyoeisha Chemical Co., Ltd.: Light Ester HO-250), and 30 parts of styrene were mixed as a monomer mixed solution, and 25 parts of 2,2'-azobis(2,4-dimethylvaleronitrile) (Wako Pure Chemical Industries, Ltd. V-65) as an initiator was dissolved in an aromatic hydrocarbon (T-SOL 100) to prepare an initiator solution. 250 parts of aromatic hydrocarbon (T-SOL 100) and 250 parts of cyclohexanone were placed in a stirrable flask, and the monomer solution and the initiator solution were added dropwise while nitrogen was enclosed. The polymerization temperature at this time was 100°C. The dropwise addition was carried out for 2 hours, and aging was further carried out at 100°C for 4 hours to obtain a polymer solution A having a weight average molecular weight of 7300 and a degree of dispersion of 2.05.

### (Synthesis Example 4)

200 parts of n-butyl methacrylate (a product manufactured by Kyoeisha Chemical Co., Ltd.: Light Ester NB), 175 parts of the monomer B, 90 parts of hydroxyethyl methacrylate (a product manufactured by Kyoeisha Chemical Co., Ltd.: Light Ester HO-250), and 25 parts of styrene were mixed as a monomer mixed solution, and 25 parts of 2,2'-azobis (2,4-dimethylvaleronitrile) (Wako Pure Chemical Industries, Ltd. V-65) as an initiator was dissolved in an aromatic hydrocarbon (T-SOL100) to prepare an initiator solution.

490 parts of aromatic hydrocarbon (T-SOL 100) was placed in a stirrable flask, and the monomer solution and the initiator solution were added dropwise while nitrogen was enclosed. The polymerization temperature at this time was 100°C. The dropwise addition was carried out for 2 hours, and aging was further carried out at 100°C for 4 hours to obtain a polymer solution B having a weight average molecular weight of 9500 and a degree of dispersion of 1.99.

### (Synthesis Example 5)

40 parts of trimethylolpropane triacrylate, 55 parts of dimethyl malonate, 56 parts of potassium carbonate, 1.5 parts of 18-crown-6 ether and 95 parts of tetrahydrofuran were mixed and stirred at 50°C for 3 hours. After the completion of the reaction, cyclohexane and water were added and followed by washing with water. An organic layer was neutralized with a saturated aqueous ammonium chloride solution and washed twice with water, and the obtained organic layer was concentrated under reduced pressure to obtain an ester compound A. The molecular weight of the ester compound A was 692.7.

### (Synthesis Example 6)

40 parts of dimethylol-tricyclodecanediacrylate, 35 parts of dimethyl malonate, 56 parts of potassium carbonate, 1.5 parts of 18-crown-6 ether, and 75 parts of tetrahydrofuran were mixed and stirred at 50°C for 3 hours. After the completion of the reaction, cyclohexane and water were added and followed by washing with water. An organic layer was neutralized with a saturated aqueous ammonium chloride solution and washed twice with water, and the obtained organic layer was concentrated under reduced pressure to obtain an ester compound B. The molecular weight of the ester compound B was 568.6.

### (Synthesis Example 7)

40 parts of trimethylolpropane triacrylate, 76 parts of diisopropyl malonic acid, 56 parts of potassium carbonate, 1.5 parts of 18-crown-6 ether, and 116 parts of tetrahydrofuran were mixed and stirred at 50°C for 3 hours. After the completion of the reaction, cyclohexane and water were added and followed by washing with water. An organic layer was neutralized with a saturated aqueous ammonium chloride solution and washed twice with water, and the obtained organic layer was concentrated under reduced pressure to obtain an ester compound C. The molecular weight of the ester compound C was 861.0.

### (Synthesis Example 8)

40 parts of trimethylolpropane triacrylate, 88 parts of di-n-butyl malonic acid, 56 parts of potassium carbonate, 1.5 parts of 18-crown-6 ether, and 128 parts of tetrahydrofuran were mixed and stirred at 50°C for 3 hours. After the completion of the reaction, cyclohexane and water were added and followed by washing with water. An organic layer was neutralized with a saturated aqueous ammonium chloride solution and washed twice with water, and the obtained organic layer was concentrated under reduced pressure to obtain an ester compound D. The molecular weight of the ester compound D was 945.1.

### (Synthesis Example 9)

52 parts of dimethylol-tricyclodecanediacrylate, 30 parts of dimethyl malonate, 56 parts of potassium carbonate, 1.5 parts of 18-crown-6 ether, and 82 parts of tetrahydrofuran were mixed and stirred at 50°C for 3 hours. After the completion of the reaction, a precipitate was filtered, and the filtrate was concentrated under reduced pressure to obtain an ester compound E. The weight average molecular weight of the ester compound E was 1810.

### (Synthesis Example 10)

40 parts of trimethylolpropane triacrylate, 88 parts of di-t-butyl malonic acid, 56 parts of potassium carbonate, 1.5 parts of 18-crown-6 ether, and 128 parts of tetrahydrofuran were mixed and stirred at 50°C for 3 hours. After the completion of the reaction, cyclohexane and water were added and followed by washing with water. An organic layer was neutralized with a saturated aqueous ammonium chloride solution and washed twice with water, and the obtained organic layer was concentrated under reduced pressure to obtain an ester compound F. The molecular weight of the ester compound F was 945.1.

### (Synthesis Example 11)

40 parts of methyl acetoacetate, 60 parts of methyl acrylate, 48 parts of potassium carbonate, 1.5 parts of 18-crown-6 ether, and 100 parts of tetrahydrofuran were mixed and stirred at 50°C for 3 hours. After the completion of the reaction, cyclohexane and water were added and followed by washing with water. An organic layer was neutralized with a saturated aqueous ammonium chloride solution and washed twice with water, and the obtained organic layer was concentrated under reduced pressure to obtain an ester compound G. The molecular weight of the ester compound G was 288.3.

### (Synthesis Example 12)

Triethylbenzylammonium chloride and a polymerization inhibitor were added to 190 parts of monomethyl succinate and 201.5 parts of trimethylolpropane triglycidyl ether (Kyoeisha Chemical Co., Ltd. Epolite 100MF), and the mixture was reacted at 90°C for 10 hours or more to obtain an ester compound H. The molecular weight of the ester compound H was 698.6.

### (Synthesis Example 13)

16 parts of diethyl malonate, 14 parts of potassium carbonate, and 60 parts of tetrahydrofuran were mixed, and the temperature was raised to 50°C. 12 parts of ethyl chloroformate was added dropwise in 1 hour, and the mixture was stirred at 70°C for 10 hours. After completion of the reaction, 140 parts of toluene and 100 parts of 10% saline solution were added. An organic layer was washed twice with 100 parts of water and was then concentrated under reduced pressure to obtain an ester compound I. The molecular weight of the ester compound I was 232.2.

### (Synthesis Example 14)

### 118 parts of isophthalic acid, 50 parts of adipic acid, 47 parts of neopentyl glycol, and 80 parts of trimethylolpropane were charged into a reactor equipped with a rectification column, the temperature was raised to 160°C, and the temperature was further gradually raised to 160 to 230°C for 3 hours. Next, after the reaction was continued at 230°C for 30 minutes, the rectification column was replaced with a water diversion device, 13 parts of xylene was added to a content part, xylene was also added to the water diversion device, and water and xylene were set to be in an azeotropic state to remove the water. After the reaction was carried out until an acid value was decreased to 10 mgKOH/g or less, the mixture was cooled, and a solid content was adjusted with cyclohexanone to obtain a polyester polyol A, which is a polyester resin solution having a resin solid content of 50%. The obtained polyester polyol A had a hydroxyl value of 122 mgKOH/g and a number average molecular weight of 3,500 as a resin solid content.

### Meanwhile, in this example, Mn (number average molecular weight) and Mw (weight average molecular weight) were polystyrene-equivalent molecular weight values measured by gel permeation chromatography (GPC). GPC KF-804L (manufactured by Showa Denko KK, polymer solutions A to D) or KF-802 (manufactured by Showa Denko KK, an ester compound E) was used as a column, and tetrahydrofuran was used as a solvent. In addition, the molecular weights of the ester compounds A to I were calculated from the chemical structures of such compounds after confirming by chemical analysis that compounds having a target structure were obtained.

### (Preparation and curing conditions of coating material composition)

### Examples 1 to 80, Comparative Examples 1 to 15

Components shown in Tables 1 to 11 were mixed to prepare coating films of 400 µm by WET using an applicator, and the coating films were cured at 150°C for 30 minutes.

### (Evaluation method)

The gel fraction was determined by dissolving the film obtained in Examples using Soxhlet for 30 minutes in acetone reflux, and measuring the residual weight% of the film as gel fraction.

When the gel fraction was 0% to 40%, it was indicated as ×, which means a state that the film cannot withstand practical use.

When the gel fraction was 40% to 60%, it was indicated as Δ, which means a state that a certain degree of curing is observed.

When the gel fraction was 60% to 80%, it was indicated as o, which means a state that the film can withstand practical use.

When the gel fraction was 80% to 100%, it was indicated as ⊚, which means a state that the performance is excellent.

In xylene rubbing, the thermosetting resin of the example was coated on a PET film and rubbed 10 times with medicinal gauze impregnated with xylene, and the surface was observed.

Those that cannot withstand practical use were indicated as ×, those that can withstand practical use were indicated as o, and further those with excellent performance were indicated as ⊚.

A coating film was formed by applying the thermosetting resin of Examples on PET film so as to have the thickness of cured film to 50 to 60 µm, and then the appearance of the obtained coating film was evaluated by observing.

### Rigid pendulum tester

The temperature was raised to 180°C at a heating rate of 3°C/min, and changes in the period and logarithmic decay rate at that time were obtained using a rigid pendulum tester manufactured by ANDCORP (model number RPT-3000W). In particular, it was used to confirm a cured state of each coating film.

### Pendulum: FRB-100

### Film thickness (WET) :100 µm

### Tension test

A thermosetting composition was coated to have a Dry film thickness of 100 µm and was baked at 150°C for 30 minutes to obtain a coating film. Each coating film was peeled off and cut into a strip shape having a length of 30 mm and a width of 4 mm.

A rheometer manufactured by Sun Scientific Co., Ltd. (model number CR-500DX) was set to be in a tension mode at a speed of 10 mm/min, and a tension test for each strip-shaped coating film was carried out. A tensile strength and a tensile fracture elongation at break at a yield point were calculated from an obtained S-S curve and evaluated according to the following standard.
Yield point
⊚: 20 MPa or more
o: 10 to 20 MPa
×: 10M Pa or less
Tensile fracture elongation
⊚: 100% or more
○: 50 to 100%
Δ: 10 to 50%
×: 10% or less

### Examples 1 to 13, Comparative Examples 1 to 12

Components shown in Tables 1 to 3 were mixed to prepare coating films of 400 µm by WET using an applicator, and the coating films were cured at 150°C for 30 minutes. Thereafter, a gel fraction, a xylene rubbing test, and a rigid pendulum test using an adjusting solution were performed. The results are shown in Tables 1 to 3.

**[Table 1]**

| | Example 1 | Example 2 | Example 3 | Example 4 | Example 5 | Example 6 | Example 7 | Example 8 | Example 9 |
|---|---|---|---|---|---|---|---|---|---|
| Polymer solution A | 140 | 140 | 140 | 140 | 140 | 140 | 140 | 140 | 140 |
| Ester compound A | 30 | 30 | 30 | 30 | 30 | | | | |
| Ester compound B | | | | | | 30 | | | |
| Tributyl citrate | | | | | | | 30 | | |
| Dimethyl sebacate | | | | | | | | 30 | |
| Ester compound C | | | | | | | | | 30 |
| Dioctyl tin dilaurate | 1.5 | | | | | | | | |
| Zinc acetylacetonate | | 1.5 | 1.5 | | | 1.5 | 1.5 | 1.5 | 1.5 |
| Triphenylphosphine | | | 1.5 | | | | | | |
| Iron (III) acetylacetonate | | | | 1.5 | | | | | |
| Aluminum chelate D | | | | | 1.5 | | | | |
| Curing temperature | 150°C | 150°C | 150°C | 150°C | 150°C | 150°C | 150°C | 150°C | 150°C |
| Curing time | 30 minutes | 30 minutes | 30 minutes | 30 minutes | 30 minutes | 30 minutes | 30 minutes | 30 minutes | 30 minutes |
| Gel fraction | ⊚ | ⊚ | ⊚ | ⊚ | ⊚ | ⊚ | ⊚ | ⊚ | ⊚ |
| Xylene rubbing | ⊚ | ⊚ | ⊚ | ⊚ | ⊚ | ⊚ | ○ | ○ | ○ |
| Rigid pendulum | FIG. 1 | FIG. 2 | | | | FIG. 3 | FIG. 4 | FIG. 5 | |
| Coating film appearance | No abnormality | No abnormality | No abnormality | No abnormality | No abnormality | No abnormality | No abnormality | No abnormality | No abnormality |

**[Table 2]**

| | Comparative Example 1 | Comparative Example 2 | Comparative Example 3 | Comparative Example 4 | Comparative Example 5 | Comparative Example 6 |
|---|---|---|---|---|---|---|
| Polymer solution A | 100 | 100 | 100 | 100 | 100 | 100 |
| Dioctyl tin dilaurate | 1.5 | | | | | |
| Zinc acetylacetonate | | 1.5 | | | | |
| Iron (III) acetylacetonate | | | 1.5 | | | |
| Titanium (IV) acetylacetonate IPA solution | | | | 2.4 | | |
| Aluminum chelate D | | | | | 1.5 | |
| Bismuth 2-ethylhexanoate | | | | | | 1.5 |
| Curing temperature | 150°C | 150°C | 150°C | 150°C | 150°C | 150°C |
| Curing time | 30 minutes | 30 minutes | 30 minutes | 30 minutes | 30 minutes | 30 minutes |
| Gel fraction | × | × | × | × | × | × |
| Xylene rubbing | × | × | × | × | × | × |
| Rigid pendulum | | | | | | |
| Coating film appearance | No abnormality | - | - | - | - | - |

**[Table 3]**

| | Example 10 | Example 11 | Example 12 | Example 13 | Comparative Example 7 | Comparative Example 8 | Comparative Example 9 | Comparative Example 10 | Comparative Example 11 | Comparative Example 12 |
|---|---|---|---|---|---|---|---|---|---|---|
| Polymer solution A | 140 | 140 | 140 | | 140 | 140 | 140 | 140 | 140 | 140 |
| Polymer solution B | | | | 90 | | | | | | |
| Ester compound A | | | | 10 | | | | | | |
| Ester compound C | 30 | | | | | | | | | |
| Ester compound D | | 30 | | | | | | | | |
| Ester compound E | | | 30 | | | | | | | |
| Ester compound F | | | | | 30 | 30 | 30 | 30 | 30 | 30 |
| Dioctyl tin dilaurate | | | | 1.65 | 1.5 | | | | | |
| Zinc acetylacetonate | | 1.5 | 1.5 | | | 1.5 | | | | |
| Iron (III) acetylacetonate | | | | | | | 1.5 | | | |
| Aluminum chelate D | | | | | | | | 1.5 | | |
| Phenolic sulfonic acid | 1.5 | | | | | | | | 1.5 | 1.5 |
| 2-amino-2-methyl-1-propanol | | | | | | | | | | 0.8 |
| Curing temperature | 150°C | 150°C | 150°C | 150°C | 150°C | 150°C | 150°C | 150°C | 150°C | 150°C |
| Curing time | 30 minutes | 30 minutes | 30 minutes | 30 minutes | 30 minutes | 30 minutes | 30 minutes | 30 minutes | 30 minutes | 30 minutes |
| Gel fraction | ⊚ | ⊚ | ⊚ | ⊚ | ○ | ○ | ○ | × | ⊚ | Δ |
| Xylene rubbing | ⊚ | ⊚ | ⊚ | ⊚ | Δ | Δ | Δ | × | ⊚ | × |
| Rigid pendulum | FIG. 6 | | | FIG. 7 | FIG. 8 | | | | FIG. 9 | FIG. 10 |
| Coating film appearance | No abnormality | No abnormality | No abnormality | No abnormality | Foaming | No abnormality | No abnormality | - | Foaming | Foaming |

From the results of Tables 1 to 3, it is apparent that the thermosetting resin composition of the present invention has satisfactory thermosetting performance. Further, in Comparative Examples 1 to 6 in which an ester compound is not contained, and Comparative Examples 7 to 12 in which tertiary alkyl ester compounds are used, a composition having satisfactory curing performance and/or coating film appearance is not obtained, and it is apparent that curing performance is significantly reduced due to the presence of amine.

### Examples 14 to 16

Components shown in Table 4 were mixed to prepare coating films of 400 µm by WET using an applicator, and the coating films were cured at 150°C for 30 minutes. Thereafter, a gel fraction, a xylene rubbing test, and a rigid pendulum test using an adjusting solution were performed. The results are shown in Table 4.

**[Table 4]**

| | Example 14 | Example 15 | Example 16 |
|---|---|---|---|
| Polymer solution A | 140 | 140 | 140 |
| Ester compound A | 30 | 30 | 30 |
| Dioctyl tin dilaurate | 1.5 | | |
| Zinc acetylacetonate | | 1.5 | |
| Iron (III) acetylacetonate | | | 1.5 |
| 2-amino-2-methyl-1 - propanol | 0.2 | 0.5 | 0.4 |
| Curing temperature | 150°C | 150°C | 150°C |
| Curing time | 30 minutes | 30 minutes | 30 minutes |
| Gel fraction | ⊚ | ⊚ | ⊚ |
| Xylene rubbing | ⊚ | ⊚ | ⊚ |
| Rigid pendulum | | FIG. 11 | |
| Coating film appearance | No abnormality | No abnormality | No abnormality |

From the results of the above-mentioned examples, it is apparent that the thermosetting resin composition of the present invention has satisfactory curing performance.

Further, from the results of Table 4, it is apparent that the thermosetting resin composition of the present invention is cured without any problem even in the presence of amine.

### Examples 17 to 80, Comparative Examples 13 to 15

Each composition was prepared and each coating film was formed in the same manner as in Example 1 described above, and evaluation was performed. The results are shown in Tables 5 to 11.

**[Table 5]**

| | Example 17 | Example 18 | Example 19 | Example 20 | Example 21 | Example 22 | Example 23 | Example 24 | Example 25 | Example 26 | Example 27 | Example 28 |
|---|---|---|---|---|---|---|---|---|---|---|---|---|
| Polyester polyol A | 140 | 140 | 140 | 140 | 140 | 140 | 140 | 140 | 140 | 140 | 140 | 140 |
| Ester compound A | 30 | 30 | 30 | 30 | 30 | 30 | | | | | | |
| Ester compound G | | | | | | | 30 | 30 | 30 | 30 | 30 | 30 |
| Methanol | | | | 5 | 5 | 5 | | | | 5 | 5 | 5 |
| Dioctyl tin diacetate | 3 | 3 | | | | | 3 | 3 | | | | |
| Dibutyldimethoxytin | | | 3 | | | | | | 3 | | | |
| Dodecylbenzene sulfonic acid | | 0.5 | | | | | | 0.5 | | | | |
| Zinc acetylacetonate | | | | 3 | 3 | | | | | 3 | 3 | |
| Trioctylphosphine oxide | | | | | 3 | | | | | | 3 | |
| Zirconium acetylacetonate | | | | | | 3 | | | | | | 3 |
| Curing temperature | 150°C | 150°C | 150°C | 150°C | 150°C | 150°C | 150°C | 150°C | 150°C | 180°C | 180°C | 180°C |
| Curing time | 30 minutes | 30 minutes | 30 minutes | 30 minutes | 30 minutes | 30 minutes | 30 minutes | 30 minutes | 30 minutes | 30 minutes | 30 minutes | 30 minutes |
| Xylene rubbing | ⊚ | ⊚ | ⊚ | ⊚ | ⊚ | ⊚ | ○ | ⊚ | ○ | ○ | ○ | ○ |
| Gel fraction | ⊚ | ⊚ | ⊚ | ⊚ | ⊚ | ⊚ | ⊚ | ⊚ | ○ | ○ | ○ | ○ |
| Coating film appearance | No abnormality | No abnormality | No abnormality | No abnormality | No abnormality | No abnormality | No abnormality | No abnormality | No abnormality | No abnormality | No abnormality | No abnormality |

**[Table 6]**

| | Example 29 | Example 30 | Example 31 | Example 32 | Example 33 | Example 34 | Example 35 | Example 36 | Example 37 | Example 38 | Example 39 | Example 40 | Example 41 | Comparative Example 13 |
|---|---|---|---|---|---|---|---|---|---|---|---|---|---|---|
| Polyester polyol A | 100 | 100 | 100 | 100 | 100 | 100 | | 140 | 140 | 140 | 140 | 140 | 140 | 200 |
| Ester compound H | 50 | 50 | 50 | 50 | 50 | 50 | 100 | | | | | | | |
| Ester compound I | | | | | | | | 30 | 30 | 30 | 30 | 30 | 30 | |
| Methanol | | | | 5 | 5 | 5 | | | | | 5 | 5 | 5 | |
| Dioctyl tin diacetate | 3 | 3 | | | | | 3 | 3 | 3 | | | | | 3 |
| Dibutyldimethoxytin | | | 3 | | | | | | | 3 | | | | |
| Dodecylbenzene sulfonic acid | | 0.5 | | | | | | | 0.5 | | | | | |
| Zinc Acety lacetonate | | | | 3 | 3 | | | | | | 3 | 3 | | |
| Trioctylphosphine oxide | | | | | 3 | | | | | | | 3 | | |
| Zirconium acety lacetonate | | | | | | 3 | | | | | | | 3 | |
| Curing temperature | 150°C | 150°C | 150°C | 150°C | 150°C | 180°C | 150°C | 150°C | 150°C | 150°C | 150°C | 150°C | 150°C | 150°C |
| Curing time | 30 minutes | 30 minutes | 30 minutes | 30 minutes | 30 minutes | 30 minutes | 30 minutes | 30 minutes | 30 minutes | 30 minutes | 30 minutes | 30 minutes | 30 minutes | 30 minutes |
| Gel fraction | ⊚ | ⊚ | ⊚ | ○ | ⊚ | ○ | ⊚ | ⊚ | ⊚ | ⊚ | ⊚ | ⊚ | ⊚ | × |
| Xylene rubbing | ⊚ | ⊚ | ⊚ | ⊚ | ⊚ | ○ | ⊚ | ⊚ | ⊚ | ⊚ | ⊚ | ○ | ⊚ | × |
| Coating film appearance | No abnormality | No abnormality | No abnormality | No abnormality | No abnormality | No abnormality | No abnormality | No abnormality | No abnormality | No abnormality | No abnormality | No abnormality | No abnormality | |

From the results of Tables 5 to 6, it is apparent that the thermosetting resin composition of the present invention has satisfactory thermosetting performance even when the thermosetting resin composition contains a polyester polyol resin.

**[Table 7]**

| | Example 42 | Example 43 | Example 44 | Example 45 |
|---|---|---|---|---|
| Polyester polyol A | 140 | 140 | 140 | 140 |
| Ester compound A | 30 | 30 | 30 | 30 |
| Methanol | | | | 10 |
| Ethylene glycol | | 3 | | |
| Neopentyl glycol | | | 5 | |
| β-cyclodextrin | | | | 2.5 |
| Dibutyldimethoxytin | 3 | 3 | 3 | 3 |
| Curing temperature | 150°C | 150°C | 150°C | 150°C |
| Curing time | 30 minutes | 30 minutes | 30 minutes | 30 minutes |
| Gel fraction | ⊚ | ⊚ | ⊚ | ⊚ |
| Xylene rubbing | ⊚ | ⊚ | ⊚ | ⊚ |
| Coating film appearance | No abnormality | No abnormality | No abnormality | No abnormality |
| Yield point strength | ○ | ⊚ | ⊚ | ⊚ |
| Tensile fracture elongation | ⊚ | ○ | ○ | Δ |

**[Table 8]**

| | Example 46 | Example 47 | Example 48 | Example 49 | Example 50 | Example 51 | Example 52 | Example 53 | Example 54 | Example 55 |
|---|---|---|---|---|---|---|---|---|---|---|
| Polyester polyol A | 140 | 140 | 140 | 140 | 140 | 140 | 140 | 140 | 140 | 140 |
| Ester compound G | 22.5 | 22.5 | 22.5 | 22.5 | | | | | | |
| Ester compound H | | | | | 22.5 | 22.5 | 7.5 | 22.5 | 22.5 | 7.5 |
| Diethyl sebacate | 7.5 | 7.5 | 7.5 | 7.5 | 7.5 | 7.5 | 22.5 | 7.5 | 7.5 | 22.5 |
| Methanol | | 5 | 5 | 5 | | 5 | 5 | 5 | 5 | 5 |
| Dioctyl tin diacetate | 3 | | | | 3 | | | | | |
| Zinc acetylacetonate | | 3 | 3 | | | 3 | 3 | 3 | | |
| Trioctylphosphine oxide | | | 3 | | | | | 3 | | |
| Zirconium acetylacetonate | | | | 3 | | | | | 3 | 3 |
| Curing temperature | 150°C | 150°C | 150°C | 150°C | 150°C | 150°C | 150°C | 150°C | 150°C | 150°C |
| Curing time | 30 minutes | 30 minutes | 30 minutes | 30 minutes | 30 minutes | 30 minutes | 30 minutes | 30 minutes | 30 minutes | 30 minutes |
| Gel fraction | ⊚ | ○ | ○ | ⊚ | ⊚ | ○ | ⊚ | ⊚ | ○ | ⊚ |
| Xylene rubbing | ⊚ | ○ | ○ | ⊚ | ⊚ | ⊚ | ⊚ | ⊚ | ○ | ○ |
| Coating film appearance | No abnormality | No abnormality | No abnormality | No abnormality | No abnormality | No abnormality | No abnormality | No abnormality | No abnormality | No abnormality |

**[Table 9]**

| | Example 56 | Example 57 | Example 58 | Example 59 | Example 60 |
|---|---|---|---|---|---|
| Polyester polyol A | 140 | 140 | 140 | 140 | 140 |
| Ester compound A | 22.5 | 22.5 | 7.5 | 22.5 | 22.5 |
| Diethyl sebacate | 7.5 | 7.5 | 22.5 | 7.5 | 7.5 |
| Methanol | | 5 | 5 | 5 | 5 |
| Dioctyl tin diacetate | 3 | | | | |
| Zinc acetylacetonate | | 3 | 3 | 3 | |
| Trioctylphosphine oxide | | | | 3 | |
| Zirconium acetylacetonate | | | | | 3 |
| Curing temperature | 150°C | 150°C | 150°C | 150°C | 150°C |
| Curing time | 30 minutes | 30 minutes | 30 minutes | 30 minutes | 30 minutes |
| Gel fraction | ⊚ | ⊚ | ⊚ | ⊚ | ⊚ |
| Xylene rubbing | ⊚ | ○ | ⊚ | ⊚ | ⊚ |
| Coating film appearance | No abnormality | No abnormality | No abnormality | No abnormality | No abnormality |

**[Table 10]**

| | Example 61 | Example 62 | Example 63 | Example 64 | Example 65 | Example 66 | Example 67 | Example 68 |
|---|---|---|---|---|---|---|---|---|
| Polyester polyol A | 140 | 140 | 140 | 140 | 140 | 140 | 140 | 140 |
| Ester compound G | 20 | 20 | 20 | 20 | 20 | 20 | 20 | 20 |
| Cymel 303LF (Allnex Japan Inc.) | 2.5 | 2.5 | 2.5 | 2.5 | | | | |
| MEKO-Blocked HDI isocyanurate | | | | | 2.5 | 2.5 | 2.5 | 2.5 |
| Dioctyl tin diacetate | 3 | | | | 3 | | | |
| Zinc acetylacetonate | | 3 | 3 | | | 3 | 3 | |
| Trioctylphosphine oxide | | | 3 | | | | 3 | |
| Zirconium acetylacetonate | | | | 3 | | | | 3 |
| Curing temperature | 150°C | 150°C | 150°C | 150°C | 150°C | 150°C | 150°C | 150°C |
| Curing time | 30 minutes | 30 minutes | 30 minutes | 30 minutes | 30 minutes | 30 minutes | 30 minutes | 30 minutes |
| Gel fraction | ⊚ | ⊚ | ⊚ | ⊚ | ⊚ | ○ | ○ | ⊚ |
| Xylene rubbing | ⊚ | ○ | ○ | ⊚ | ⊚ | ○ | ○ | ○ |
| Coating film appearance | No abnormality | No abnormality | No abnormality | No abnormality | No abnormality | No abnormality | No abnormality | No abnormality |

**[Table 11]**

| | Example 69 | Example 70 | Example 71 | Example 72 | Example 73 | Example 74 | Example 75 | Example 76 | Example 77 | Example 78 | Example 79 | Example 80 | Comparative Example 14 | Comparative Example 15 |
|---|---|---|---|---|---|---|---|---|---|---|---|---|---|---|
| Polyester polyol A | 140 | 140 | 140 | 140 | 140 | 140 | 140 | 140 | 140 | 140 | 140 | 140 | 140 | 140 |
| Ester compound A | 20 | 20 | 20 | 20 | 20 | 20 | 20 | 20 | | | | | | |
| Ester compound H | | | | | | | | | 20 | 20 | 20 | 20 | | |
| Cymel 303LF (Allnex Japan Inc.) | 2.5 | 2.5 | 2.5 | 2.5 | | | | | 2.5 | 2.5 | | | 2.5 | |
| MEKO-Blocked HDI isocvanurate | | | | | 2.5 | 2.5 | 2.5 | 2.5 | | | 2.5 | 2.5 | | 2.5 |
| Dioctyl tin diacetate | 3 | | | | 3 | | | | 3 | | 3 | | 3 | 3 |
| Zinc acety lacetonate | | 3 | 3 | | | 3 | 3 | | | 3 | | 3 | | |
| Trioctylphosphine oxide | | | 3 | | | | 3 | | | 3 | | 3 | | |
| Zirconium acety lacetonate | | | | 3 | | | | 3 | | | | | | |
| Curing temperature | 150°C | 150°C | 150°C | 150°C | 150°C | 150°C | 150°C | 150°C | 150°C | 150°C | 150°C | 150°C | 150°C | 150°C |
| Curing time | 30 minutes | 30 minutes | 30 minutes | 30 minutes | 30 minutes | 30 minutes | 30 minutes | 30 minutes | 30 minutes | 30 minutes | 30 minutes | 30 minutes | 30 minutes | 30 minutes |
| Gel fraction | ⊚ | ⊚ | ⊚ | ⊚ | ⊚ | ⊚ | ⊚ | ⊚ | ⊚ | ⊚ | ⊚ | ⊚ | Δ | Δ |
| Xylene rubbing | ⊚ | ⊚ | ⊚ | ⊚ | ⊚ | ⊚ | ⊚ | ⊚ | ⊚ | ○ | ⊚ | ○ | × | × |
| Coating film appearance | No abnormality | No abnormality | No abnormality | No abnormality | No abnormality | No abnormality | No abnormality | No abnormality | No abnormality | No abnormality | No abnormality | No abnormality | No abnormality | No abnormality |

From the results of Tables 7 to 11, the thermosetting resin composition of the present invention can be used in combination with a low molecular weight polyol (B-3), in combination with a compound (A) having a bifunctional and trifunctional or higher functional alkyl ester group, and in combination with other crosslinking agents, and it is apparent that satisfactory coating film physical properties are obtained as desired.

### (Preparation and coating method of coating material in Example 81)

136 parts of 2-ethylhexyl methacrylate (Kyoeisha Chemical Co., Ltd. Light Ester EH), 68 parts of a monomer B, 68 parts of 2-hydroxyethyl methacrylate, 68 parts of 2-hydroxybutyl methacrylate, 114 parts of styrene, and 45 parts of 2-methacryloyloxyethyl succinic acid (Kyoeisha Chemical Co., Ltd. Light Ester HO-MS(N)) were mixed as a monomer mixed solution, and 25 parts of 2,2'-azobis (2,4-dimethylvaleronitrile) (Fujifilm Wako Pure Chemical Corporation V-65) as an initiator was dissolved in aromatic hydrocarbon (T-SOL 100) to prepare an initiator solution. 500 parts of aromatic hydrocarbon (T-SOL 100) was placed in a stirrable flask, and the monomer solution and the initiator solution were added dropwise while nitrogen was enclosed. The polymerization temperature at this time was 100°C. The dropwise addition was carried out for 2 hours, and aging was further carried out at 100°C for 4 hours to obtain a polymer solution F having a weight average molecular weight of 8,500 and a degree of dispersion of 1.93.

Next, a thermosetting composition shown in Table 12 was prepared, and a solid content at 105°C and a viscosity at 25°C (E-type viscometer: manufactured by Atago Co., Ltd.) were measured. The thermosetting composition was spray-coated on a dull steel sheet having a thickness of 0.8 mm so as to have a film thickness of 10 µm after drying, and was baked at 150°C for 30 minutes. Visual evaluation in a coating film state, a gel fraction, and a xylene rubbing resistance test were performed on the obtained coating film. The results are shown in Table 12.

**[Table 12]**

| | Example 81 |
|---|---|
| Polymer solution F | 140 |
| Ester compound G | 20 |
| Monobutyltin oxide | 2.7 |
| Solid content concentration (%) | 56 |
| Viscosity (25°C, mPa·s) | 80 |
| Coating method | Air spray coating |
| Dry film thickness | 10 µm |
| Curing temperature | 150°C |
| Curing time | 30 minutes |
| Gel fraction | ⊚ |
| Xylene rubbing | ⊚ |
| Coating film appearance | No abnormality |

From the results of Example 81, it is apparent that satisfactory coatability, curing performance, and coating film performance can be obtained even when the thermosetting composition of the present invention is used as a high solid composition.

### (Industrial Applicability)

The thermosetting resin composition of the present invention can be used as various coating material compositions, adhesive compositions, and pressure-sensitive adhesive compositions as a cured film.

## Claims

1. A thermosetting resin composition comprising:
a compound (A) which is a compound (A-a) having two or more -COOR (R is a primary or secondary alkyl group) and/or a compound (A-b) having one -COOR (R is a primary or secondary alkyl group) and a hydroxyl group;
a polyol (B) having two or more hydroxyl groups; and a transesterification catalyst (C).

2. The thermosetting resin composition according to claim 1,
wherein the transesterification catalyst (C) is a metal compound containing a metal other than alkali metal or a basic compound.

3. The thermosetting resin composition according to claim 1 or 2,
wherein the compound (A) has a molecular weight of 3000 or less.

4. The thermosetting resin composition according to claim 1, 2, or 3,
wherein the compound (A) has a molecular weight/the number of -COOR groups=300 or less.

5. The thermosetting resin composition according to claim 1 or 2,
wherein the compound (A) is a compound having at least one structure represented by the following General formula (1) and/or General formula (2):
[Chem. 1] 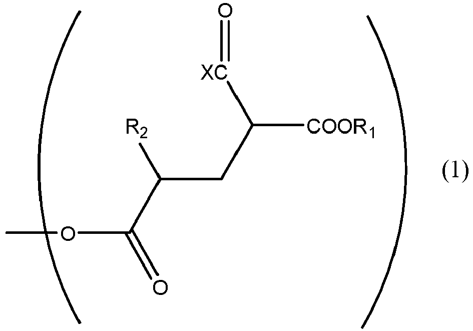 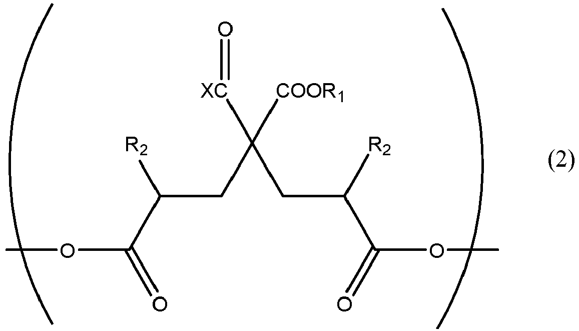 (R₁ represents a primary or secondary alkyl group;
X represents a hydrocarbon group having 5 or less carbon atoms or a -OR₁ group; in a case where a plurality of R₁ are contained in a molecule, these may be the same as or different from each other).

6. The thermosetting resin composition according to any one of claims 1 to 3,
wherein the compound (A) is a compound having a structure represented by the following General formula (3): 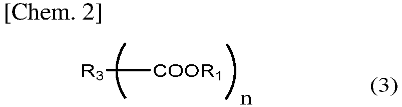 (in the formula, R₁ represents a primary or secondary alkyl group;
R₃ represents a hydroxyl group, an alkyl group or an alkylene group with 1 to 50 carbon atoms that may contain an ester group; n is an integer of 2 to 20)

7. The thermosetting resin composition according to claim 1, 2, 3, 4, or 5, wherein the polyol resin (B) has a weight average molecular weight of 1000 to 1000000.

8. The thermosetting resin composition according to any one of claims 1 to 7, which is a solvent-free, powder, solvent-based, or water-based composition.

9. The thermosetting resin composition according to any one of claims 1 to 8,
wherein a viscosity at 25°C is 200 mPa·s or less when a solid content is 55% by weight or more in a state where only the components (A) to (C) and a solvent are contained.

10. A cured film formed by three-dimensionally crosslinking the thermosetting resin composition according to any one of claims 1 to 9.
